# EUROPÄISCHE PATENTSCHRIFT

(11) **EP 3 624 966 B1**
(45) Veröffentlichungstag und Bekanntmachung des Hinweises auf die Patenterteilung: **22.12.2021**
(21) Anmeldenummer: 18719520.1
(22) Anmeldetag: 19.04.2018
(51) Int. Cl.: B22F 10/28, B22F 12/30, B33Y 10/00, B33Y 30/00, B29C 64/20, B29C 64/227

(54) **VORRICHTUNG UND VERFAHREN ZUM HERSTELLEN VON DREIDIMENSIONALEN WERKSTÜCKEN**
DEVICE AND METHOD FOR PRODUCING THREE-DIMENSIONAL WORKPIECES
DISPOSITIF ET PROCÉDÉ POUR LA FABRICATION DES PIÈCES TRIDIMENSIONNELLES

(30) Priorität: 19.05.2017 DE 102017208496
(43) Veröffentlichungstag der Anmeldung: 25.03.2020
(73) Patentinhaber: SLM Solutions Group AG, 23560 Lübeck (DE)
(72) Erfinder: HOPPE, Birk, 23560 Lübeck (DE); WILKES, Jan, 23560 Lübeck (DE); ROESGEN, Lukas, 23560 Lübeck (DE)
(74) Vertreter: Schicker, Silvia
(86) Internationale Anmeldenummer: PCT/EP2018/060075
(87) Internationale Veröffentlichungsnummer: WO 2018/210521

(56) Entgegenhaltungen:
- EP-A2- 2 708 297
- DE-A1-102007 014 968

## Beschreibung

Die Erfindung betrifft eine Vorrichtung und ein Verfahren zum Herstellen von dreidimensionalen Werkstücken. Insbesondere betrifft die Erfindung eine Vorrichtung und ein Verfahren zum Herstellen von dreidimensionalen Werkstücken mithilfe eines generativen Schichtbauverfahrens.

Bei generativen Verfahren zum Herstellen dreidimensionaler Werkstücke und insbesondere bei generativen Schichtbauverfahren ist es bekannt, eine zunächst formlose oder formneutrale Formmasse (zum Beispiel ein Rohstoffpulver) schichtweise auf einen Träger aufzutragen und durch ortsspezifisches Bestrahlen zu verfestigen (z. B. durch Verschmelzen oder Versintern), um letztendlich ein Werkstück einer gewünschten Form zu erhalten. Das Bestrahlen kann mittels elektromagnetischer Strahlung erfolgen, beispielsweise in Form von Laserstrahlung. In einem Ausgangszustand kann die Formmasse zunächst als Granulat, als Pulver oder als flüssige Formmasse vorliegen und infolge der Bestrahlung selektiv oder, anders ausgedrückt, ortsspezifisch verfestigt werden. Die Formmasse kann zum Beispiel Keramik-, Metall- oder Kunststoffmaterialien umfassen und auch Materialgemische hieraus. Eine Variante von generativen Schichtbauverfahren betrifft das sogenannte Pulverbettschmelzen, bei dem insbesondere metallische und/oder keramische Rohstoffpulvermaterialien zu dreidimensionalen Werkstücken verfestigt werden.

Zum Herstellen einzelner Werkstückschichten ist es ferner bekannt, Rohstoffpulvermaterial in Form einer Rohstoffpulverschicht auf einen Träger aufzubringen und selektiv sowie nach Maßgabe der Geometrie der aktuell herzustellenden Werkstückschicht zu bestrahlen. Die Laserstrahlung dringt in das Rohstoffpulvermaterial ein und verfestigt dieses, beispielsweise in Folge eines Erhitzens, was ein Schmelzen oder Sintern verursacht. Ist eine Werkstückschicht verfestigt, wird eine neue Schicht von unverarbeitetem Rohstoffpulvermaterial auf die bereits hergestellte Werkstückschicht aufgebracht. Hierzu können bekannte Beschichteranordnungen oder Pulverauftragsvorrichtungen verwendet werden. Anschließend erfolgt eine erneute Bestrahlung der nun obersten und noch unverarbeiteten Rohstoffpulverschicht. Folglich wird das Werkstück sukzessive Schicht für Schicht aufgebaut, wobei jede Schicht eine Querschnittsfläche und/oder eine Kontur des Werkstücks definiert. In diesem Zusammenhang ist es ferner bekannt, auf CAD- oder vergleichbare Werkstückdaten zurückzugreifen, um die Werkstücke im Wesentlichen automatisch herzustellen.

Eine Bestrahlungseinheit bzw. ein Bestrahlungssystem, das zum Beispiel in einer Vorrichtung zum Herstellen dreidimensionaler Werkstücke durch Bestrahlen von Rohstoffpulvermaterialien verwendbar ist, wird in der EP 2 333 848 B1 beschrieben. Das Bestrahlungssystem umfasst eine Strahlquelle, insbesondere eine Laserquelle, und eine optische Einheit. Die optische Einheit, der ein von der Strahlquelle ausgesandter Bearbeitungsstrahl zur Verfügung gestellt wird, umfasst eine Strahlenaufweiteinheit und eine Ablenkvorrichtung in Form einer Scannereinheit. Innerhalb der Scannereinheit sind diffraktive optische Elemente vor einem Ablenkspiegel vorgesehen, wobei die diffraktiven optischen Elemente in den Strahlenweg bewegbar sind, um den Bearbeitungsstrahl in eine Mehrzahl von Bearbeitungsteilstrahlen aufzuteilen. Der Ablenkspiegel dient dann zum Ablenken der Bearbeitungsteilstrahlen.

Es versteht sich, dass im Rahmen der vorliegenden Erfindung sämtliche der vorstehend erläuterten Aspekte ebenfalls vorgesehen sein können.

Bekannte Vorrichtungen zum Herstellen von dreidimensionalen Werkstücken finden sich beispielsweise in der EP 2 961 549 A1 und in der EP 2 878 402 A1.

Die in diesen Dokumenten beschriebenen Vorrichtungen umfassen jeweils einen Träger, welcher Schicht für Schicht in vertikale Richtung nach unten abgesenkt werden kann. Eine entsprechende vertikale Bewegung des Trägers findet in diesen bekannten Vorrichtungen immer dann statt, wenn eine Schicht des Rohstoffpulvers vollständig bestrahlt wurde und bevor die nächste Pulverschicht aufgetragen wird. Somit kann gewährleistet werden, dass sich eine Fokalebene der Bestrahlungseinheit immer in der zu verfestigen Schicht (d. h. in der obersten Schicht) des Rohstoffpulvers befindet. Während eines Bauprozesses wird das Werkstück also schichtweise in einem Bauzylinder hergestellt, wobei sich die Tiefe des Bauzylinders durch das Absenken der Bodenplatte während des Bauprozesses vergrößert und eine durch die Fläche des Trägers und durch entsprechende Seitenwände des Bauzylinders vorgegebene Grundfläche des Bauzylinders konstant bleibt. Das maximale Volumen des Bauzylinders definiert somit eine Obergrenze für das maximale Volumen eines herzustellenden Werkstücks.

In den oben beschriebenen bekannten Vorrichtungen erfordert die vertikale Bewegbarkeit des Trägers eine Aktorik bzw. eine Hubmechanik. Diese Hubmechanik muss unter anderem sowohl das aufzubauende Werkstück als auch das umgebende Pulvermaterial tragen und bewegen. Abhängig von der Anlagengröße und der Größe eines entsprechenden Bauraums (Volumen des Bauzylinders) kann die verwendete Hubmechanik hierbei an ihre Belastungsgrenzen kommen, was eine aufwändigere und somit teurere Hubmechanik erfordern würde. Ferner verändert sich während des Bauprozesses das von der Hubmechanik zu bewegende Gewicht. Dies kann dazu führen, dass der Verstellweg zwischen zwei Verstellvorgängen der Hubmechanik nicht konstant gehalten werden kann, was in unerwünschten Abweichungen der Schichtdicke der Rohstoffpulverschichten resultiert.

DE 10 2007 014968 A1 offenbart eine Vorrichtung zur Herstellung von Gegenständen durch schichtweises Aufbauen aus pulverförmigem, insbesondere metallischem oder/und keramischem Werkstoff, umfassend eine Trägeranordnung mit einem Träger und einem den Träger umgebenden Bauzylinder, die gemeinsam einen Bauraum für den Schichtaufbau bilden, und eine Bestrahlungseinrichtung zur Bestrahlung der jeweils zuletzt auf der Trägeranordnung präparierten Werkstoffpulverschicht in einem dieser Schicht zugeordneten Querschnittsbereich des betreffenden Gegenstands oder ggf. der betreffenden Gegenstände mit Strahlung, insbesondere Laserstrahlung, die das Werkstoffpulver in diesem Querschnittsbereich durch Erhitzen zum Verschmelzen oder ggf. zum Versintern bringt, wobei die Bestrahlungseinrichtung eine steuerbare Zieleinrichtung für die Strahlung zur ortsselektiven Bestrahlung des Baufeldes aufweist. Es ist vorgesehen, dass der Bauzylinder bezüglich des Trägers vertikal beweglich ist, um mit zunehmender Schichtanzahl einen Bauraum größerer Höhe bilden zu können.

EP 2 708 297 A2 offenbart eine additive Fertigungsmaschine umfassend eine feste Plattform, die eine Arbeitsfläche zum Unterstützen der Herstellung eines Teils definiert, und ein Gehäuse, das eine Kammer über der Arbeitsfläche definiert. Ein Materialapplikator ist auf dem Gehäuse gelagert, um Material auf der Arbeitsfläche abzuscheiden. Eine Energieleitvorrichtung ist ebenfalls auf dem Gehäuse gelagert und leitet Energie innerhalb der Kammer, um ein Teil zu bilden. Das Gehäuse ist relativ zur Arbeitsfläche beweglich, bewegt daher die Energieerzeugungsvorrichtung relativ zur Arbeitsfläche, um während der Herstellung einen Abstand zwischen der Energieleitvorrichtung und einer Oberfläche des Teils aufrechtzuerhalten.

Aufgabe der Erfindung ist es, eine Lösung für ein generatives Schichtaufbauverfahren bereitzustellen, welche die oben genannten Probleme und andere damit zusammenhängende Probleme verringert oder überwindet.

Diese Aufgabe wird durch eine Vorrichtung bzw. durch ein Verfahren mit den Merkmalen der unabhängigen Patentansprüche gelöst. Bevorzugte Ausführungsformen sind in den abhängigen Ansprüchen angegeben.

Die Erfindung betrifft demnach gemäß einem ersten Aspekt eine Vorrichtung zum Herstellen von dreidimensionalen Werkstücken gemäß den Ansprüchen 1, 9 und 10.

Die Vorrichtung umfasst einen Träger zum Aufnehmen von Rohstoffpulver und eine Bestrahlungseinheit zum selektiven Bestrahlen des auf den Träger aufgetragenen Rohstoffpulvers mit elektromagnetischer Strahlung oder Teilchenstrahlung, um auf dem Träger ein aus dem Rohstoffpulver gefertigtes Werkstück durch ein generatives Schichtbauverfahren herzustellen. Die Vorrichtung umfasst ferner eine vertikale Bewegungseinrichtung, welche dazu eingerichtet ist, die Bestrahlungseinheit vertikal bezüglich des Trägers zu bewegen, und eine sich im Wesentlichen vertikal erstreckende Bauzylinderwand, welche eine seitliche Begrenzung für das auf den Träger aufgetragene Rohstoffpulver darstellt, wobei die Bauzylinderwand dazu eingerichtet ist, ihre vertikale Höhe während eines Bauprozesses zu vergrößern.

Hierbei kann der Träger eine horizontale Oberfläche bereitstellen, auf welche das Rohstoffpulver schichtweise, d. h. in horizontalen Schichten, aufgetragen werden kann. Die Bauzylinderwand kann hierbei zur seitlichen Begrenzung eines Bauzylinders dienen. Der Begriff des Bauzylinders ist in der vorliegenden Offenbarung nicht so zu verstehen, dass eine Form des Bauzylinders auf die Form eines Kreiszylinders beschränkt ist. Vielmehr kann es sich bei einer Form des Bauzylinders um einen allgemeinen Zylinder mit beliebiger Grundfläche handeln. Der Bauzylinder kann beispielsweise - definiert durch die Bauzylinderwand - einen runden, elliptischen, vieleckigen oder rechteckigen (mit oder ohne abgerundete Ecken), insbesondere einen quadratischen Querschnitt aufweisen. Die Bauzylinderwand kann insofern eine seitliche Begrenzung für das auf den Träger aufgetragene Rohstoffpulver darstellen, als die Bauzylinderwand das Rohstoffpulver in Form hält und/oder mechanisch seitlich abstützt. Hierfür kann das Rohstoffpulver direkt an die Bauzylinderwand angrenzen. Es kann jedoch, wie weiter unten beschrieben, auch eine Bauzylinderhülle vorgesehen sein, welche sich zwischen dem Rohstoffpulver und der Bauzylinderwand erstreckt, sodass das Rohstoffpulver nicht direkt an die Bauzylinderwand, sondern vielmehr direkt an die Bauzylinderhülle angrenzt. Hierbei kann die Bauzylinderhülle aus einem flexiblen Material bestehen, sodass eine seitliche Ausdehnung des flexiblen Materials durch die Bauzylinderwand verhindert wird. Auch in diesem Fall wird somit das Rohstoffpulver von der Bauzylinderwand in Form gehalten.

Die Bauzylinderwand kann dazu eingerichtet sein, das auf den Träger aufgetragene Rohstoffpulver seitlich vollständig zu umgeben und das Rohstoffpulver zu allen Seiten hin in Form zu halten. Hierbei bedeutet "zu allen Seiten hin", dass die Bauzylinderwand in sämtliche horizontale Richtungen eine Barriere für das Rohstoffpulver darstellt.

Die vertikale Höhe (im Folgenden auch nur: "Höhe") der Bauzylinderwand kann hierbei definiert sein als eine Höhe der Bauzylinderwand, welche als Bauzylinderwand nutzbar ist. Anders ausgedrückt kann die Höhe definiert werden als eine Höhe, welche für die seitliche Begrenzung des auf den Träger aufgetragenen Rohstoffpulvers nutzbar ist. Die vertikale Höhe der Bauzylinderwand kann beispielsweise auch definiert sein als eine vertikale Höhe der Bauzylinderwand eines sich im Wesentlichen vertikal erstreckenden Abschnitts der Bauzylinderwand. Der sich im Wesentlichen vertikal erstreckende Abschnitt kann Bereiche aufweisen, welche sich sowohl oberhalb als auch unterhalb des Trägers erstrecken.

Der Begriff des Bauzylinders ist in der vorliegenden Offenbarung so zu verstehen, dass es sich dabei um einen räumlichen Bereich handelt, in dem die Auftragung der Rohstoffpulverschichten stattfindet und welcher nach unten durch den Träger und seitlich durch die Bauzylinderwand begrenzt wird. Oberhalb des Bauzylinders kann sich eine Prozesskammer anschließen, welche einen Raum bildet, durch welchen der Strahl der Bestrahlungseinheit gelenkt wird, um auf eine gewünschte Stelle der obersten Pulverschicht zu treffen. Ferner können sich in der Prozesskammer weitere Elemente der Vorrichtung, wie beispielsweise eine Pulverauftragsvorrichtung, befinden.

Allgemein gesprochen kann die Vorrichtung eine Pulverauftragsvorrichtung umfassen, welche dazu eingerichtet ist, das Rohstoffpulver schichtweise auf den Träger aufzutragen. Die Pulverauftragsvorrichtung kann einen Pulverbehälter umfassen oder und/oder mit einem Pulverreservoir verbunden sein, sodass der Pulverauftragsvorrichtung Rohstoffpulver zugeführt werden kann. Die Pulverauftragsvorrichtung kann dazu eingerichtet sein, in horizontaler Richtung über eine vorherige Pulverschicht zu fahren und dabei eine neue Pulverschicht aufzutragen. Hierfür kann die Pulverauftragsvorrichtung mindestens eine Walze, einen Schieber und/oder ähnliche geeignete Mittel zum Auftragen einer Rohstoffpulverschicht umfassen.

Die Prozesskammer kann zusammen mit dem Bauzylinder einen luftdicht abgeschlossenen Raum darstellen. Dieser Raum kann während des Bauprozesses mit einem Inertgas (beispielsweise Argon oder Stickstoff) gefüllt sein.

Bei dem hierin beschriebenen Bauzylinder kann es sich um einen Bauzylinder mit im Wesentlichen rechteckiger Grundfläche und mit Seitenlängen von beispielsweise jeweils mehr als 50 cm handeln. Anders ausgedrückt kann mindestens eine der beiden orthogonalen Seitenlängen des Trägers mindestens 50 cm betragen. Ferner kann mindestens eine der beiden orthogonalen Seitenlängen des Trägers mindestens 100 cm betragen. Es kann sich somit bei dem hierin verwendeten Träger beispielsweise um einen Träger mit einer Grundfläche von 1 m x 1 m handeln.

Die Bestrahlungseinheit kann mindestens ein optisches Element umfassen. Bei dem optischen Element der Bestrahlungseinheit kann es sich beispielsweise um eine Scan-Einheit, eine Fokussier-Einheit und/oder um eine F-Theta-Linse handeln. Ferner kann die Bestrahlungseinheit eine Strahlquelle umfassen, wie beispielsweise eine Elektronenstrahlquelle oder einen Laser. Die von der Bestrahlungseinheit ausgesendete Strahlung kann der Bestrahlungseinheit jedoch auch von einer Strahlquelle zugeführt werden, welche sich außerhalb der Bestrahlungseinheit befindet. Hierfür können beispielsweise Spiegel, optische Fasern und/oder andere Lichtleiter verwendet werden.

Der Träger kann ortsfest mit einem Fundament der Vorrichtung verbunden sein. Das Fundament der Vorrichtung kann beispielsweise eine Bodenplatte der Vorrichtung umfassen. Das Fundament kann dazu eingerichtet sein, nach dem Aufbau der Vorrichtung und/oder während des Betriebs der Vorrichtung (d. h. während eines Bauprozesses) unbeweglich zu sein. Insbesondere kann das Fundament unbeweglich bezüglich einer vertikalen Richtung sein. Hierbei bedeutet der Begriff "unbeweglich" eine Ortsfestigkeit in Bezug auf die Umgebung, in welcher die Vorrichtung aufgebaut ist.

Die vertikale Bewegungseinrichtung kann beispielsweise eine Hubvorrichtung umfassen. Die vertikale Bewegungseinrichtung kann einen oder mehrere hydraulische und/oder mechanische Stellantriebe umfassen. Während der vertikalen Bewegung kann sich die Bestrahlungseinheit gemeinsam mit der zuvor erwähnten Prozesskammer (d. h. gemeinsam mit einer Prozesskammerwand der Prozesskammer) vertikal bewegen lassen.

Die Vorrichtung kann ferner eine Mehrzahl von Wandelementen umfassen, welche dazu eingerichtet sind, lösbar miteinander verbunden zu werden, sodass sie in einem verbundenen Zustand die sich im Wesentlichen vertikal erstreckende Bauzylinderwand bilden.

Die vertikale Höhe der Bauzylinderwand kann definiert sein durch eine Summer der vertikalen Höhen der sich im verbundenen Zustand befindlichen Wandelemente.

Ein oberstes Wandelement der Bauzylinderwand kann mechanisch mit einem unteren Bereich der Prozesskammer verbunden sein und gemeinsam mit der Prozesskammer und der Bestrahlungseinheit vertikal bewegt werden. Beispielsweise kann eine fest mit der Prozesskammer verbundene Bauzylinderwand vorgesehen sein, an welche sich während eines Bauprozesses weitere Wandelemente von unten befestigen lassen.

Die Mehrzahl von Wandelementen kann beispielsweise mithilfe von geeigneten Verbindungsmitteln miteinander verbindbar sein. Die Verbindung ist insofern lösbar als sie sich ohne Zerstörung der Wandelemente und/oder ggf. vorgesehener Verbindungsmittel und auf klar definierte Weise wieder lösen lässt. Als Verbindungsmittel können beispielsweise eine Steckverbindung, eine Rastverbindung, eine Schraube, ein Gewinde, ein Bolzen, ein anderes geeignetes Verbindungsmittel und/oder eine beliebige Kombination der vorgenannten Mittel vorgesehen sein.

Im verbundenen Zustand können die miteinander verbundenen Wandelemente eine durchgehende im Wesentlichen vertikale Wandfläche bilden. Die Wandelemente können dazu eingerichtet sein, von Hand oder mithilfe einer geeigneten Verbindungseinrichtung miteinander verbunden zu werden.

Die Vorrichtung kann dazu eingerichtet sein, eines der hierin beschriebenen Verfahren durchzuführen. Insbesondere kann die Vorrichtung eine geeignete Steuereinheit aufweisen, welche so programmiert ist, dass sie die Vorrichtung so ansteuert, dass die Vorrichtung eines der hierin beschriebenen Verfahren durchführt. Die Steuereinheit kann einen Prozessor (beispielsweise eine CPU) und einen Speicher umfassen.

Die Wandelemente können so miteinander verbindbar sein, dass im verbundenen Zustand mindestens zwei der Wandelemente in vertikaler Richtung übereinander angeordnet sind.

Hierbei können die Wandelemente geeignete vertikale Verbindungsmittel aufweisen, mithilfe derer sie in vertikaler Richtung miteinander verbindbar sind. Die vertikale Verbindung kann an im Wesentlichen horizontal verlaufenden Grenzflächen der Wandelemente durchgeführt werden.

Die Wandelemente können so miteinander verbindbar sein, dass im verbundenen Zustand mindestens zwei der Wandelemente in horizontaler Richtung nebeneinander angeordnet sind.

Hierbei können die Wandelemente geeignete horizontale Verbindungsmittel aufweisen, mithilfe derer sie in horizontaler Richtung miteinander verbindbar sind. Die horizontale Verbindung kann an im Wesentlichen vertikal verlaufenden Grenzflächen der Wandelemente durchgeführt werden.

Die vertikale Bewegungseinrichtung kann dazu eingerichtet sein, die Bauzylinderwand gemeinsam mit der Bestrahlungseinheit vertikal bezüglich des Trägers zu bewegen.

Hierzu kann die Bauzylinderwand im verbundenen Zustand mechanisch mit der Bestrahlungseinheit gekoppelt sein. Beispielsweise kann die Bauzylinderwand mit einer Prozesskammer verbunden sein, wobei auch die Bestrahlungseinheit mit der Prozesskammer verbunden ist. Insbesondere kann die Bestrahlungseinheit mit einem oberen Deckenbereich der Prozesskammer verbunden sein und die Bauzylinderwand kann mit einem unteren Bodenbereich der Prozesskammerwand verbunden sein. Hierbei kann beispielsweise ein Teil der Bauzylinderwand starr und unlösbar mit der Prozesskammer verbunden sein, wobei die weiteren Wandelemente mit diesem starren Teil der Bauzylinderwand verbindbar sind, um die Bauzylinderwand zu bilden.

Die Vorrichtung kann ferner eine weitere vertikale Bewegungseinrichtung umfassen, welche dazu eingerichtet ist, die Bauzylinderwand vertikal bezüglich des Trägers zu bewegen.

Die Bewegung der Bestrahlungseinheit kann somit unabhängig von der Bewegung der Bauzylinderwand durchgeführt werden. Hierbei kann jedoch die weitere vertikale Bewegungseinrichtung dazu eingerichtet sein, einer Bewegung der Bestrahlungseinheit zu folgen, d. h. eine vertikale Bewegung durchzuführen, welche der der vertikalen Bewegungseinrichtung der Bestrahlungseinheit entspricht.

Die Vorrichtung kann ferner eine innere Bauzylinderhülle umfassen, wobei ein unterer Rand der Bauzylinderhülle mit dem Träger verbunden ist und ein oberer Rand der Bauzylinderhülle von der vertikalen Bewegungseinrichtung vertikal gemeinsam mit der Bestrahlungseinheit bewegbar ist, wobei die innere Bauzylinderhülle dazu eingerichtet ist, im verbundenen Zustand der Wandelemente eine innere Wand für das auf den Träger aufgetragene Rohstoffpulver darzustellen, wobei das Rohstoffpulver direkt an die Bauzylinderhülle angrenzt.

Die Begriffe "innere Bauzylinderhülle" und "Bauzylinderhülle" werden hierin synonym verwendet. Der untere Rand der Bauzylinderhülle kann beispielsweise an einem Rand des Trägers befestigt sein. Der obere Rand der Bauzylinderhülle kann beispielsweise an einem unteren Bodenbereich einer Prozesskammer der Vorrichtung befestigt sein.

Das Material der Bauzylinderhülle kann pulverundurchlässig und, optional, gasundurchlässig (insbesondere undurchlässig für ein verwendetes Inertgas) sein.

Die innere Bauzylinderhülle kann mindestens eines der folgenden Elemente umfassen: eine flexible Hülle aus dehnbarem Material, einen Faltenbalg, und/oder mehrere Wandsegmente, welche dazu eingerichtet sind, in einem eingefahrenen Zustand ineinander geschachtelt gelagert zu werden und teleskopmäßig in einen ausgefahrenen Zustand ausgefahren zu werden.

Das dehnbare Material kann beispielsweise ein flexibles Kunststoff- und/oder Gummi-Material umfassen. Die Wandsegmente können jeweils erheblich dünnwandiger sein (z. B. maximal ein Viertel der Dicke) als die Wandelemente der Bauzylinderwand.

Die Vorrichtung kann ferner eine Verbindungseinrichtung umfassen, welche dazu eingerichtet ist, die Wandelemente während eines Bauprozesses miteinander zu verbinden.

Die Verbindungseinrichtung kann beispielsweise einen Roboterarm umfassen und/oder andere geeignete Mittel, um die Wandelemente miteinander zu verbinden. Die Verbindungseinrichtung kann dazu eingerichtet sein, die Wandelemente zu greifen und diese während dem Bauprozess von unten an bereits verbundene (sich bereits im verbundenen Zustand befindliche) Wandelemente zu befestigen. Hierbei ist jegliche Art von automatisierter Verbindung der Wandelemente möglich.

Die Vorrichtung kann ferner eine Mehrzahl von Wandelementen umfassen, welche mittels flexibler Verbindungen miteinander verbunden sind, wobei sich ein erster Teil der Wandelemente in einem vertikalen Zustand befindet, wobei die Wandelemente des ersten Teils im vertikalen Zustand die sich im Wesentlichen vertikal erstreckende Bauzylinderwand bilden, und wobei sich ein zweiter Teil der Wandelemente in einem aufgerollten Zustand befindet, wobei die Wandelemente des zweiten Teils im aufgerollten Zustand nicht die im Wesentlichen vertikal erstreckende Bauzylinderwand bilden, und wobei die Mehrzahl von Wandelementen dazu eingerichtet ist, dass Wandelemente aus dem aufgerollten Zustand in den vertikalen Zustand ausgerollt werden können, sodass die vertikale Höhe der Bauzylinderwand vergrößert wird.

Die vertikale Höhe der Bauzylinderwand kann definiert sein durch eine Summer der vertikalen Höhen der sich im vertikalen Zustand befindlichen Wandelemente.

Die Wandelemente können in Form einer Jalousie miteinander verbunden sein. Während des Bauprozesses können immer mehr Wandelemente in den vertikalen Zustand ausgerollt werden, sodass sich die Höhe der Bauzylinderwand vergrößert. Die Wandelemente im aufgerollten Zustand können sich unterhalb des Trägers befinden.

Die Bauzylinderwand kann von einer flexiblen Wand aus dehnbarem Material gebildet werden, wobei ein unterer Rand der flexiblen Wand mit dem Träger verbunden ist und ein oberer Rand der flexiblen Wand von der vertikalen Bewegungseinrichtung vertikal gemeinsam mit der Bestrahlungseinheit bewegbar ist.

Hinsichtlich der flexiblen Wand gilt das oben zur Bauzylinderhülle Gesagte, mit dem einzigen Unterschied, dass für die flexible Wand keine zusätzliche Bauzylinderwand außerhalb der flexiblen Wand vorgesehen sein muss. Die flexible Wand kann so ausgestaltet sein, dass sie zwar einerseits in vertikale Richtung so flexibel ist, um während des Bauprozesses in vertikale Richtung verformt zu werden, jedoch in horizontale Richtung weniger flexibel ist, sodass sie das Rohstoffpulver in Form (beispielsweise in quaderförmiger Form) halten kann. Anders ausgedrückt kann die flexible Wand so ausgestaltet sein, dass sie in vertikale Richtung leichter zu verformen ist als in horizontale Richtung.

Die Vorrichtung kann ferner umfassen eine Auffangwanne zum Auffangen von Rohstoffpulver, welches nach Beendigung eines Bauprozesses und nach einem zumindest teilweisen Anheben oder Entfernen der Bauzylinderwand seitlich von dem Träger hinabrieselt, und eine Abdichtungseinrichtung, welche dazu eingerichtet ist, das seitlich von dem Träger hinabrieselndes Rohstoffpulver in die Auffangwanne zu leiten. Die Abdichtungseinrichtung kann beispielsweise in Form eines Faltenbalgs ausgestaltet werden. Die Abdichtungseinrichtung kann beispielsweise mit einem ersten Ende der Abdichtungseinrichtung an einer Unterseite der Prozesskammer angebracht sein. Ferner kann die Abdichtungseinrichtung mit einem zweiten Ende der Abdichtungseinrichtung an der Auffangwanne befestigt sein. Die Abdichtungseinrichtung kann ein flexibles Material umfassen, welches es ermöglicht, eine vertikale Höhe der Abdichtungseinrichtung zu verändern. Die Abdichtungseinrichtung kann auch lösbar mit einem untersten Wandelement der Bauzylinderwand verbunden sein.

Gemäß einem zweiten Aspekt betrifft die Erfindung ein Verfahren zum Herstellen von dreidimensionalen Werkstücken gemäß der Ansprüche 12, 16 und 17.

Das Verfahren umfasst Auftragen von Rohstoffpulver auf einen Träger und selektives Bestrahlen des auf den Träger aufgetragenen Rohstoffpulvers mit elektromagnetischer Strahlung oder Teilchenstrahlung durch eine Bestrahlungseinheit, um auf dem Träger ein aus dem Rohstoffpulver gefertigtes Werkstück durch ein generatives Schichtbauverfahren herzustellen. Das Verfahren umfasst ferner vertikales Bewegen der Bestrahlungseinheit bezüglich des Trägers durch eine vertikale Bewegungseinrichtung und Vergrößern, während eines Bauprozesses, einer vertikalen Höhe einer sich im Wesentlichen vertikal erstreckende Bauzylinderwand, welche eine seitliche Begrenzung für das auf den Träger aufgetragene Rohstoffpulver darstellt.

Das Verfahren kann beispielsweise von einer der hierin beschriebenen Vorrichtungen durchgeführt werden. Die hierin angegebenen Schritte des Verfahrens können - außer es wird explizit anders angegeben - in beliebiger Reihenfolge durchgeführt werden. Insbesondere kann der Schritt des vertikalen Bewegens vor oder nach dem Schritt des Vergrößerns durchgeführt werden. Ferner können auch mehrere Schritte des Vergrößerns und/oder des vertikalen Bewegens vorgesehen sein. Der Schritt des Vergrößerns kann während eines Bauprozesses der Vorrichtung durchgeführt werden. Anders ausgedrückt kann der Schritt des Vergrößerns ausgeführt werden, wenn ein herzustellendes Werkstück teilweise, jedoch noch nicht vollständig gefertigt wurde, also noch nicht sämtliche für das Werkstück erforderlichen Pulverschichten aufgetragen und verfestigt wurden.

Der Schritt des Vergrößerns kann ferner umfassen lösbares Verbinden einer Mehrzahl von Wandelementen miteinander, sodass sie in einem verbundenen Zustand die sich im Wesentlichen vertikal erstreckende Bauzylinderwand bilden.

Das Verfahren kann ferner umfassen lösbares Verbinden mindestens eines weiteren Wandelements an einer Unterseite mindestens eines der die Bauzylinderwand bildenden Wandelemente und vertikales Bewegen der Bauzylinderwand nach oben. Somit können mindestens zwei (oder auch mehrere) Wandelemente miteinander verbunden werden und insbesondere übereinander miteinander verbunden werden, um die Bauzylinderwand zu bilden.

Die Wandelemente können so miteinander verbunden werden, dass im verbundenen Zustand mindestens zwei der Wandelemente in vertikaler Richtung übereinander angeordnet sind. Die Wandelemente können ferner so miteinander verbunden werden, dass im verbundenen Zustand mindestens zwei der Wandelemente in horizontaler Richtung nebeneinander angeordnet sind.

Die Bauzylinderwand kann gemeinsam mit der Bestrahlungseinheit von der vertikalen Bewegungseinrichtung vertikal bezüglich des Trägers bewegt werden.

Die Bauzylinderwand kann von einer weiteren vertikalen Bewegungseinrichtung vertikal bezüglich des Trägers bewegt werden.

Das Verfahren kann ferner umfassen Entfernen mindestens eines der Wandelemente, wobei das entfernte Wandelement eines der untersten Wandelemente der Bauzylinderwand darstellt, sodass Rohstoffpulver seitlich von dem Träger hinabrieseln kann.

Der Schritt des Entfernens kann nach einem erfolgten Bauprozess durchgeführt werden. Insbesondere kann der Schritt des Entfernens als Beginn eines "Auspackprozesses" des fertigen Werkstücks durchgeführt werden.

Das Verfahren kann ferner umfassen vertikales Bewegen der Bauzylinderwand nach oben, sodass zwischen einem untersten Wandelement der Bauzylinderwand und dem Träger ein Spalt entsteht, durch den Rohstoffpulver seitlich von dem Träger hinabrieseln kann.

Der Schritt des vertikalen Bewegens nach oben kann nach einem erfolgten Bauprozess durchgeführt werden. Insbesondere kann der Schritt des vertikalen Bewegens nach oben als Beginn eines "Auspackprozesses" des fertigen Werkstücks durchgeführt werden.

Nach dem oben genannten Schritt des Entfernens oder nach dem oben genannten Schritt des vertikalen Bewegens nach oben können die zuvor verbundenen Wandelemente wieder entfernt (gelöst) werden, die Bestrahlungseinheit kann (ggf. zusammen mit der Prozesskammer) wieder in einen Ausgangszustand verfahren werden (nach unten) und ein neuer Bauprozess kann begonnen werden.

Ferner können eine Mehrzahl von Wandelementen vorgesehen sein, welche mittels flexibler Verbindungen miteinander verbunden sind, wobei sich ein erster Teil der Wandelemente in einem vertikalen Zustand befindet, wobei die Wandelemente des ersten Teils im vertikalen Zustand die sich im Wesentlichen vertikal erstreckende Bauzylinderwand bilden, und wobei sich ein zweiter Teil der Wandelemente in einem aufgerollten Zustand befindet, wobei die Wandelemente des zweiten Teils im aufgerollten Zustand nicht die im Wesentlichen vertikal erstreckende Bauzylinderwand bilden. Hierbei kann das Verfahren ferner umfassen Ausrollen von Wandelementen aus dem aufgerollten Zustand in den vertikalen Zustand, sodass die vertikale Höhe der Bauzylinderwand vergrößert wird.

Die Bauzylinderwand kann ferner von einer flexiblen Wand aus dehnbarem Material gebildet sein, wobei ein unterer Rand der flexiblen Wand mit dem Träger verbunden ist. Hierbei kann das Verfahren ferner umfassen vertikales Bewegen eines oberen Rands der flexiblen Wand von der vertikalen Bewegungseinrichtung gemeinsam mit der Bestrahlungseinheit.

Das Verfahren kann ferner umfassen Auffangen des hinabrieselnden Rohstoffpulvers in einer Auffangwanne und Leiten des hinabrieselnden Rohstoffpulvers in die Auffangwanne mithilfe einer Abdichtungseinrichtung. Ferner kann das Verfahren ein Befestigen eines Endes der Abdichtungseinrichtung an einer Unterseite der Prozesskammer oder an einem untersten Wandelement der Bauzylinderwand umfassen. Die Abdichtungseinrichtung kann hierbei nicht nur dazu eingerichtet sein, Rohstoffpulver zu leiten, sondern auch dazu, Rohstoffpulverstaub davon abzuhalten, in die Umgebung der Vorrichtung 1 freigesetzt zu werden.

Die Erfindung wird im Folgenden anhand der beigefügten Figuren erläutert. Es stellen dar:
- Figur 1a:: eine schematische Seitenansicht eines ersten Ausführungsbeispiels einer erfindungsgemäßen Vorrichtung, die ein erfindungsgemäßes Verfahren ausführt;
- Figur 1b:: eine schematische Seitenansicht des ersten Ausführungsbeispiels zu einem späteren Zeitpunkt des erfindungsgemäßen Verfahrens;
- Figur 2a:: eine schematische Seitenansicht eines zweiten Ausführungsbeispiels einer erfindungsgemäßen Vorrichtung, die ein erfindungsgemäßes Verfahren ausführt;
- Figur 2b:: eine schematische Seitenansicht des zweiten Ausführungsbeispiels zu einem späteren Zeitpunkt des erfindungsgemäßen Verfahrens;
- Figur 3a:: eine schematische Seitenansicht des ersten Ausführungsbeispiels zu einem Zeitpunkt nach dem in Fig. 1b dargestellten Zeitpunkt des erfindungsgemäßen Verfahrens;
- Figur 3b:: eine schematische Seitenansicht des ersten Ausführungsbeispiels zu einem Zeitpunkt nach dem in Fig. 3a dargestellten Zeitpunkt des erfindungsgemäßen Verfahrens;
- Figur 4a:: eine schematische Seitenansicht des ersten Ausführungsbeispiels zu einem Zeitpunkt nach dem in Fig. 1b dargestellten Zeitpunkt eines alternativen erfindungsgemäßen Verfahrens;
- Figur 4b:: eine schematische Seitenansicht des ersten Ausführungsbeispiels zu einem Zeitpunkt nach dem in Fig. 4a dargestellten Zeitpunkt des alternativen erfindungsgemäßen Verfahrens;
- Figur 5a:: eine schematische Seitenansicht eines dritten Ausführungsbeispiels einer erfindungsgemäßen Vorrichtung, die ein erfindungsgemäßes Verfahren ausführt;
- Figur 5b:: eine schematische Seitenansicht des dritten Ausführungsbeispiels zu einem späteren Zeitpunkt des erfindungsgemäßen Verfahrens;
- Figur 6:: eine schematische Seitenansicht eines vierten Ausführungsbeispiels einer erfindungsgemäßen Vorrichtung, die ein erfindungsgemäßes Verfahren ausführt;
- Figur 7a: eine schematische Seitenansicht einer Abwandlung des ersten Ausführungsbeispiels; und
- Figur 7b: eine schematische Seitenansicht der Abwandlung gemäß Fig. 7a zu einem Zeitpunkt nach dem in Fig. 7a dargestellten Zeitpunkt.

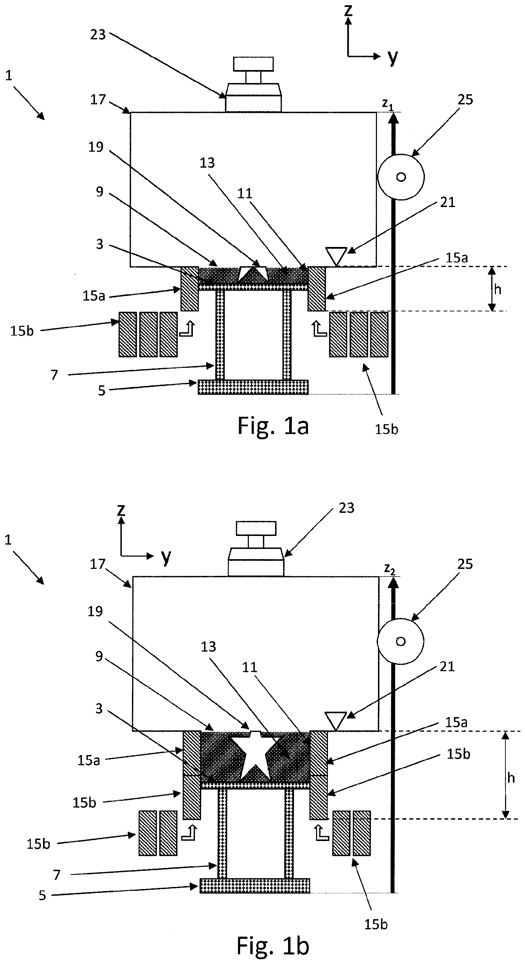

In den Figuren 1a und 1b wird ein erstes Ausführungsbeispiel einer erfindungsgemäßen Vorrichtung 1 in einer schematischen Seitenansicht dargestellt.

Die Ansichten der Figuren sind nicht notwendigerweise maßstabsgetreu. Eine vertikale Richtung wird in der Figur durch die z-Richtung definiert und eine horizontale Ebene (im Folgenden auch x-y-Ebene) erstreckt sich senkrecht zur Zeichenebene entlang eines Trägers 3 der Vorrichtung 1.

Die Vorrichtung 1 umfasst ein ortsfestes Fundament 5, welches ortsfest mit einer Bodenplatte (nicht dargestellt) der Vorrichtung 1 verbunden ist oder selbst eine Bodenplatte der Vorrichtung 1 darstellt. Die Vorrichtung 1 kann ferner ein äußeres Gehäuse (nicht dargestellt) mit äußeren Wänden und einer äußeren Decke aufweisen. Die Vorrichtung 1 kann jedoch auch ohne eigenes äußeres Gehäuse in offener Bauweise beispielsweise in einer Fabrikhalle vorgesehen sein.

Ferner umfasst die Vorrichtung 1 den Träger 3, welcher mit dem Fundament 5 fest verbunden ist und welcher eine horizontale rechteckige Oberfläche aufweist. In dem Ausführungsbeispiel der Figuren ist der Träger 3 mithilfe von Stützelementen 7 unter einem vorbestimmten Abstand (d. h. auf einer vorbestimmten Höhe in z-Richtung) zum Fundament 5 vorgesehen und an diesem befestigt. Der Träger 3 ist dazu eingerichtet, mehrere Schichten an Rohstoffpulver 9 aufzunehmen. Seitlich an den Träger 3 grenzt eine Bauzylinderwand 11 an, welche den Träger 3 seitlich vollständig umgibt. Sowohl der Träger 3 als auch die Bauzylinderwand 11 weisen somit in Draufsicht einen rechteckigen Querschnitt auf. Die Bauzylinderwand 11 umgibt den Träger 3 seitlich so, dass sie an das sich auf dem Träger 3 befindende Rohstoffpulver 9 angrenzt, dieses seitlich abstützt und in einer quaderförmigen Form hält.

Die Bauzylinderwand 11 definiert einen sich innerhalb der Bauzylinderwand 11 befindlichen Bauzylinder 13. Der Bauzylinder 13 wird nach unten durch den Träger 3 und seitlich durch die Bauzylinderwand 11 begrenzt. Die Bauzylinderwand 11 wird durch erste Wandelemente 15a gebildet, welche an einer Unterseite bzw. einem unteren Bodenbereich einer Prozesskammer 17 der Vorrichtung 1 befestigt sind. Die ersten Wandelemente 15a können entweder lösbar mit der Prozesskammer 17 verbunden sein oder starr und unlösbar mit der Prozesskammer 17 verbunden sein. Ferner sind weitere Wandelemente 15b vorgesehen, welche mit den Wandelementen 15a verbunden werden können, wie weiter unten im Zusammenhang mit Figur 1b beschrieben wird.

Eine vertikale Höhe h der Bauzylinderwand 11 ist hierbei definiert als eine vertikale Höhe h der Bauzylinderwand 11 eines sich im Wesentlichen vertikal erstreckenden Abschnitts der Bauzylinderwand 11. Der sich im Wesentlichen vertikal erstreckende Abschnitt weist hierbei Bereiche auf, welche sich sowohl oberhalb als auch unterhalb des Trägers 3 erstrecken. In der Abbildung der Figur 1a ist beispielsweise lediglich eine Schicht erster Wandelemente 15a vorgesehen, wobei die Höhe h der Bauzylinderwand in diesem Zustand durch eine vertikale Höhe dieser ersten Wandelemente 15a gebildet wird.

Die Prozesskammer 17 und der Bauzylinder 13 bilden gemeinsam einen Raum, welcher luftdicht abgeschlossen sein kann und mit einem Inertgas (wie beispielsweise Stickstoff oder Argon) gefüllt sein kann. Ein luftdichtes Abdichten nach oben ist jedoch beispielsweise bei der Verwendung von Argon als Schutzgas nicht zwingend notwendig, da sich Argon aufgrund seiner hohen Dichte im Bereich des Bauzylinders 13 (also im Bereich des Rohstoffpulvers 9) ansammelt und nicht nach oben hin entweichen kann. In der Prozesskammer 17 und dem Bauzylinder 13 findet ein Bauprozess eines Werkstücks 19 mithilfe eines generativen Schichtbauverfahrens statt.

Die Vorrichtung 1 weist ferner eine Pulverauftragsvorrichtung 21 auf, mithilfe derer das Rohstoffpulver 9 schichtweise auf den Träger 3 aufgetragen werden kann. Hierzu kann die Pulverauftragsvorrichtung 21 mindestens eine Walze, mindestens einen Schieber und/oder andere geeignete Pulverauftragsmittel umfassen, welche dazu geeignet sind, eine möglichst gleichmäßig dicke Rohstoffpulverschicht auf dem Träger 3 bzw. auf einer vorherigen Rohstoffpulverschicht aufzutragen. Die Pulverauftragsvorrichtung 21 ist mit einem Rohstoffpulver-Reservoir (nicht dargestellt) verbunden, um von diesem mit Rohstoffpulver 9 versorgt zu werden.

Die Vorrichtung 1 weist ferner eine Bestrahlungseinheit 23 auf, zum selektiven Bestrahlen des schichtweise auf den Träger 3 aufgetragen Rohstoffpulvers 9. Die Bestrahlungseinheit 23 ist an einem oberen Deckenbereich der Prozesskammer 17 fest mit dieser verbunden. Mithilfe der Bestrahlungseinheit 23 kann das Rohstoffpulver 9 einer ortsselektiven Strahlung ausgesetzt werden, in Abhängigkeit von der gewünschten Geometrie des herzustellenden Werkstücks 19. Hierzu weist die Bestrahlungseinheit 23 eine Strahlquelle auf, welche in Form eines Lasers bereitgestellt werden kann. Dieser kann beispielsweise Licht bei einer Wellenlänge von ungefähr 1064 nm emittieren. Alternativ hierzu kann sich die Strahlquelle (beispielsweise ein Laser) auch außerhalb der Bestrahlungseinheit 23 befinden und ein auf das Rohstoffpulver 9 zu richtender Strahl wird der Bestrahlungseinheit 23 beispielsweise mithilfe einer optischen Faser zugeführt.

Die Bestrahlungseinheit 23 weist ferner optische Elemente, wie beispielsweise eine Scan-Einheit, eine Fokussier-Einheit und eine F-Theta-Linse auf. Die Scan-Einheit ist dazu eingerichtet, den Strahl über die oberste Rohstoffpulverschicht innerhalb einer horizontalen Ebene (in x-Richtung und y-Richtung) zu scannen. Die Fokussier-Einheit ist dazu eingerichtet, eine Fokus-Position des Strahls (in z-Richtung) zu verändern bzw. anzupassen, sodass eine Fokalebene der Bestrahlungseinheit 23 sich im Bereich der obersten Rohstoffpulverschicht befindet, welche von der Bestrahlungseinheit 23 bestrahlt wird. Die Bestrahlungseinheit 23 kann beispielsweise eine Bestrahlungseinheit bzw. Bestrahlungsvorrichtung wie in EP 2 333 848 B1 beschrieben sein.

Ferner weist die Vorrichtung 1 eine vertikale Bewegungseinrichtung 25 auf, welche dazu eingerichtet ist, die Bestrahlungseinheit 23 relativ zum Träger 3 entlang der vertikalen Richtung (z-Richtung) zu bewegen. Wie in der Figur 1a dargestellt ist, sind die Bestrahlungseinheit 23 sowie die ersten Wandelemente 15a mit der Prozesskammer 17 verbunden, sodass die vertikale Bewegungseinrichtung die Prozesskammer 17 gemeinsam mit der Bestrahlungseinheit 23 und den ersten Wandelementen 15a vertikal auf- und abwärts bewegen kann. Anders ausgedrückt sind die Bestrahlungseinheit 23 und die ersten Wandelemente 15a so mit der Prozesskammer 17 verbunden, dass eine vertikale Bewegung der Prozesskammer 17 zu einer vertikalen Bewegung der Bestrahlungseinheit 23 und der ersten Wandelemente 15a relativ zum Träger 3 und somit relativ zum Fundament 5 führt.

Ferner ist die Pulverauftragsvorrichtung 21 mit der Prozesskammer 17 so verbunden, dass eine vertikale Bewegung der Prozesskammer 17 bzw. der Bestrahlungseinheit 23 zu einer vertikalen Bewegung der Pulverauftragsvorrichtung 21 führt. Für die Pulverauftragsvorrichtung 21 ist eine horizontale Bewegungseinrichtung (nicht dargestellt) vorgesehen, mithilfe derer die Pulverauftragsvorrichtung 21 über den Träger 3 in horizontaler Richtung bewegt werden kann, um das Rohstoffpulver 9 aufzutragen.

Die vertikale Bewegungseinrichtung 25 der in Figur la dargestellten Vorrichtung 1 umfasst einen Motor, bei dem es sich beispielsweise um einen Schrittmotor oder Servomotor handeln kann. Die vertikale Bewegungseinrichtung 25 kann jedoch auf vielfältige Weise ausgestaltet sein und kann beispielsweise jeglicher Art von Aktorik bzw. Hubvorrichtung umfassen. Beispielsweise kann die vertikale Bewegungseinrichtung 25 einen hydraulischen und/oder mechanischen Stellantrieb aufweisen. Die vertikale Bewegungseinrichtung 25 kann beispielsweise eine Spindelwelle und einen die Spindelwelle antreibenden Motor aufweisen.

Mithilfe der vertikalen Bewegungseinrichtung 25 kann ein vertikaler Abstand zwischen der Bestrahlungseinheit 23 und dem Träger 3 verändert werden. Insbesondere kann dieser Abstand so verändert werden, dass ein Abstand zwischen der Bestrahlungseinheit 23 und der obersten Schicht des Rohstoffpulvers 9 immer konstant bleibt. Die durch die vertikale Bewegungseinrichtung 25 veranlasste vertikale Bewegung der Prozesskammer 17 findet gemeinsam mit den ersten Wandelementen 15a (und gegebenenfalls weiteren Wandelementen 15b) und somit gemeinsam mit der Bauzylinderwand 11 statt. Das heißt insbesondere, dass die Bauzylinderwand 11 von der vertikalen Bewegungseinrichtung 25 mitbewegt wird.

Ferner umfasst die Vorrichtung 1 eine Steuereinheit (nicht dargestellt), welche dazu eingerichtet ist, die vertikale Bewegungseinrichtung 25 anzusteuern. Die Steuereinheit umfasst eine CPU und einen Speicher, wobei ein Programm auf dem Speicher gespeichert ist, welches bei der Ausführung durch die CPU die Vorrichtung 1 dazu veranlasst, eines der hierin beschriebenen Verfahren durchzuführen. Ferner kann die Steuereinheit sämtliche Steuerungsaufgaben der Vorrichtung 1 übernehmen und beispielsweise die Bestrahlungseinheit 23 (sowie darin enthaltene optische Elemente) und die Pulverauftragsvorrichtung 21 steuern.

Ein Bauprozess der Vorrichtung 1 wird im Folgenden anhand der Figuren 1a und 1b erläutert. Der Bauprozess findet so statt und wird von der Steuereinheit so gesteuert, dass die vertikale Bewegungseinrichtung 25 die Pulverauftragsvorrichtung 21 (gemeinsam mit der Prozesskammer 17 und der Bestrahlungseinheit 23) so weit in einen Ausgangszustand hinunter fährt, dass die Pulverauftragsvorrichtung 21 eine erste Rohstoffpulverschicht auf den Träger 3 auftragen kann. Alternativ können sich die Bestrahlungseinheit 23, die Prozesskammer 17 und die ersten Wandelemente 15a bereits in diesem Ausgangszustand befinden. Anschließend oder gleichzeitig bewegt die vertikale Bewegungseinrichtung 25 - falls nötig - die Bestrahlungseinheit 23 auf eine Höhe, die dazu geeignet ist, diese erste Rohstoffpulverschicht selektiv zu bestrahlen und (beispielsweise durch Verschmelzen oder Versintern) zu verfestigen. Hierbei scannt die Scan-Einheit den Strahl gemäß einem vorbestimmten Muster über das Rohstoffpulver 9. Nachdem die erste Rohstoffpulverschicht wie gewünscht bestrahlt wurde, fährt die vertikale Bewegungseinrichtung 25 die Pulverauftragsvorrichtung 21 in eine Höhe, in der diese eine zweite Rohstoffpulverschicht auf die erste Rohstoffpulverschicht auftragen kann. Anschließend erfolgt ein Bestrahlungsvorgang der zweiten Rohstoffpulverschicht, analog zur Bestrahlung der ersten Rohstoffpulverschicht.

Während des Bauprozesses für das gewünschte Werkstück 19 fährt die vertikale Bewegungseinrichtung 25 somit die Bestrahlungseinheit 23 (und die Prozesskammer 17 samt Pulverauftragsvorrichtung 21 und ersten Wandelementen 15a) immer weiter von dem Träger 3 weg nach oben (in positive z-Richtung).

In Figur 1a ist die Vorrichtung 1 beispielsweise in einer Situation während des Bauprozesses dargestellt, in welcher sich die Bestrahlungseinheit 23 auf einer ersten Höhe z1 (relativ zu einer Unterseite des Fundaments 5 bzw. relativ zu einer Bodenplatte der Vorrichtung 1) befindet. Mit fortschreitendem Bauprozess vergrößert sich eine Tiefe des Bauzylinders 13 und es werden immer längere Bauzylinderwände 11 notwendig, um das Rohstoffpulver 9 vor einem unkontrollierten seitlichen Herabrieseln von dem Träger 3 zu hindern. Wenn also die Länge (in z-Richtung) der ersten Wandelemente 15a nicht mehr ausreicht, werden weitere Wandelemente 15b von unten an die ersten Wandelemente 15a befestigt. Anders ausgedrückt werden weitere Wandelemente 15b von unten an bereits vorhandene Wandelemente 15a, 15b (Wandelemente im verbundenen Zustand) befestigt wenn eine Gesamttiefe (in z-Richtung) der Pulverschichten eine Gesamtlänge (in z-Richtung) der vorhandenen Wandelemente 15a, 15b erreicht hat, oder kurz zuvor.

In Figur 1b ist beispielsweise eine Situation dargestellt, zu einem späteren Zeitpunkt als die in der Figur la dargestellte Situation, wobei sich die Bestrahlungseinheit 23 auf einer zweiten Höhe z2 befindet, welche größer ist als die erste Höhe z1 der Figur 1a. In diesem Zustand sind die ersten Wandelemente 15a nicht mehr ausreichend und es wurden weitere Wandelemente 15b von unten an die ersten Wandelemente 15a befestigt, sodass sich die Wandelemente 15a und 15b in einem verbundenen Zustand befinden und so dass diese Wandelemente 15a, 15b eine gemeinsame Bauzylinderwand 11 bilden.

Die Höhe h der Bauzylinderwand 11 ist in Figur 1b größer als in Figur 1a. Zum Zeitpunkt der Figur 1b befinden sich zwei Schichten von ersten Wandelementen 15a in einem verbundenen Zustand. Hierbei wird die Höhe h durch die Summe der vertikalen Höhen der Wandelemente 15a im verbundenen Zustand definiert. Im Falle der Figur 1b entspricht somit die Höhe h der Summe der vertikalen Höhen von zwei Wandelementen 15a.

Eine Abdichtung zwischen den einzelnen Wandelementen 15a, 15b kann in einer bevorzugten Ausführungsform mithilfe eines innenliegenden, an den Wandelementen 15a, 15b anliegenden Schlauchgebildes realisiert werden. Hierdurch kann ein Hindurchrieseln von Rohstoffpulver 9 und ein Abrieb der Wandelemente 15a, 15b durch Rohstoffpulver 9 verhindert werden sowie die Inertgasatmosphäre stabil gehalten werden.

Zum Verbinden der Wandelemente 15a, 15b können diese entsprechende Verbindungsmittel aufweisen, welche dazu geeignet sind, eine lösbare Verbindung der Wandelemente 15a, 15b zu gewährleisten. Die Verbindungsmittel sind ferner so ausgestaltet, dass im verbundenen Zustand der Wandelemente 15a, 15b eine möglichst durchgängige im Wesentlichen vertikale Bauzylinderwand 11 bereitgestellt werden kann. Die Wandelemente 15a, 15b können beispielsweise Verbindungsmittel in Form von Steckverbindungen, Schrauben sowie zugehöriger Gewinde, Bolzen sowie zugehöriger Öffnungen, Haken sowie zugehöriger Ösen usw. umfassen. Ein Verbindungsvorgang der Wandelemente 15a, 15b kann während des Bauprozesses manuell durch einen Bediener der Vorrichtung 1 durchgeführt werden. Alternativ dazu kann eine Verbindungsvorrichtung (nicht dargestellt) bereitgestellt werden, welche dazu eingerichtet ist, die einzelnen Wandelemente 15a, 15b miteinander zu verbinden. Die Verbindungsvorrichtung kann beispielsweise mindestens einen Roboterarm oder ein anderes geeignetes Element zum Verbinden der Wandelemente 15a, 15b umfassen.

Die Wandelemente 15a, 15b können beispielsweise so ausgestaltet sein, dass in einer Ebene parallel zum Träger 3 (also in einer Schicht von Wandelementen 15a, 15b) jeweils genau ein Wandelement 15a, 15b für jede Seite des rechteckigen Trägers 3 vorgesehen ist. Somit können die ersten Wandelemente 15a vier Wandelemente 15a umfassen, welche jeweils an eine Seitenkante des Trägers 3 angrenzen. Wenn eine längere Bauzylinderwand 11 benötigt wird (siehe Figur 1b) kann für jedes der vier ersten Wandelemente 15a ein zweites Wandelement 15b unterhalb des jeweiligen ersten Wandelements 15a mittels vertikalen Verbindungsmitteln befestigt werden. Ferner können horizontale Verbindungsmittel vorgesehen sein, um die Wandelemente 15b einer Schicht von Wandelementen 15b horizontal miteinander zu verbinden. Eine horizontale Verbindung der Wandelemente 15b kann beispielsweise in einem Eckbereich der Bauzylinderwand 11 stattfinden, wo die einzelnen Wandelemente 15b senkrecht aneinander angrenzen.

Die Wandelemente 15a, 15b können insbesondere plattenförmig und im Wesentlichen rechteckig ausgebildet sein, wobei vertikale und optional horizontale Verbindungsmittel an seitlichen Randbereichen der Wandelemente 15a, 15b vorgesehen sind.

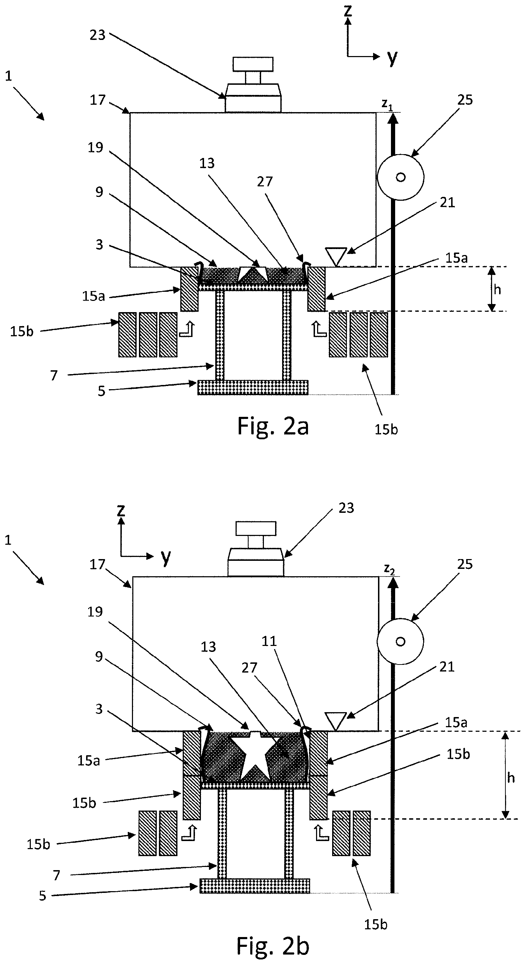

In den Figuren 2a und 2b wird ein zweites Ausführungsbeispiel einer erfindungsgemäßen Vorrichtung 1 in einer schematischen Seitenansicht dargestellt. Das zweite Ausführungsbeispiel ist hinsichtlich des ersten Ausführungsbeispiels lediglich geringfügig abgeändert, sodass eine Beschreibung der identischen Merkmale der beiden Ausführungsbeispiele nicht wiederholt wird. Merkmale, welche mit denselben Bezugszeichen gekennzeichnet sind, erfüllen dieselbe Funktion wie im Hinblick auf das erste Ausführungsbeispiel beschrieben.

Abweichend von der Vorrichtung des ersten Ausführungsbeispiels weist die Vorrichtung 1 des zweiten Ausführungsbeispiels zusätzlich eine innere Bauzylinderhülle 27 auf. Die Bauzylinderhülle 27 ist zwischen der Bauzylinderwand 11 der Wandelemente 15a, 15b und dem Rohstoffpulver 9 angeordnet, sodass das Rohstoffpulver 9 direkt an die Bauzylinderhülle 27, jedoch nicht direkt an die Bauzylinderwand 11 angrenzt.

Wie in den Figuren 2a und 2b dargestellt, ist ein unterer Rand der Bauzylinderhülle 27 mit dem Träger 3 verbunden und ein oberer Rand der Bauzylinderhülle 27 wird von der vertikalen Bewegungseinrichtung 25 vertikal gemeinsam mit der Bestrahlungseinheit 23 bewegt. Der untere Rand der Bauzylinderhülle 27 ist an einem Rand des Trägers 3 befestigt. Der obere Rand der Bauzylinderhülle 27 ist an einem unteren Bodenbereich der Prozesskammer 17 befestigt. Das Material der Bauzylinderhülle 27 ist pulverundurchlässig, um das Rohstoffpulver 9 davon abzuhalten, die Bauzylinderwand 11 direkt zu berühren. Ferner kann die Bauzylinderhülle 27 für das Inertgas undurchlässig sein, um die Inertgasatmosphäre innerhalb des Bauzylinders 17 aufrecht zu erhalten.

Wenn zusätzlich die Bauzylinderhülle 27 vorgesehen ist, wie in den Figuren 2a und 2b dargestellt, so kann einerseits Abrieb der Bauzylinderwand 11 durch das Rohstoffpulver 9 vermieden werden. Andererseits müssen die Wandelemente 15a, 15b und insbesondere die Verbindungsstellen zwischen den Wandelementen 15a, 15b nicht so stark abgedichtet sein (bezüglich Durchdringen von Pulver und/oder Gas) wie im Fall der Figuren la und 1b, in denen das Rohstoffpulver 9 direkt an die Wandelemente 15a, 15b angrenzt.

Die innere Bauzylinderhülle 27 besteht im Beispiel der Figuren 2a und 2b aus einer flexiblen Hülle aus dehnbarem Material. Das dehnbare Material kann beispielsweise ein flexibles Kunststoff- und/oder Gummi-Material umfassen. Alternativ hierzu kann jedoch auch ein Faltenbalg oder mehrere Wandsegmente vorgesehen sein, welche dazu eingerichtet sind, in einem eingefahrenen Zustand ineinander geschachtelt gelagert zu werden und teleskopmäßig in einen ausgefahrenen Zustand ausgefahren zu werden.

Durch die Dehnungsfähigkeit der Bauzylinderhülle 27 kann diese mit zunehmender Beabstandung von Prozesskammer 17 und Träger 3 während des Bauprozesses in z-Richtung expandieren (siehe Figur 2b). Eine möglicherweise mit der Dehnungsfähigkeit einhergehende Ausdehnung auch in x-und y-Richtung wird durch die Wandelemente 15a, 15b aufgefangen und so der Bauzylinder 13 stabilisiert.

Ein Bauprozess der Vorrichtung 1 gemäß dem zweiten Ausführungsbeispiel verläuft ähnlich zu dem Bauprozess der Vorrichtung 1 gemäß dem ersten Ausführungsbeispiel, wobei bei Bedarf weitere Wandelemente 15b an bereits vorhandene Wandelemente 15a, 15b von unten befestigt werden (siehe Figur 2b).

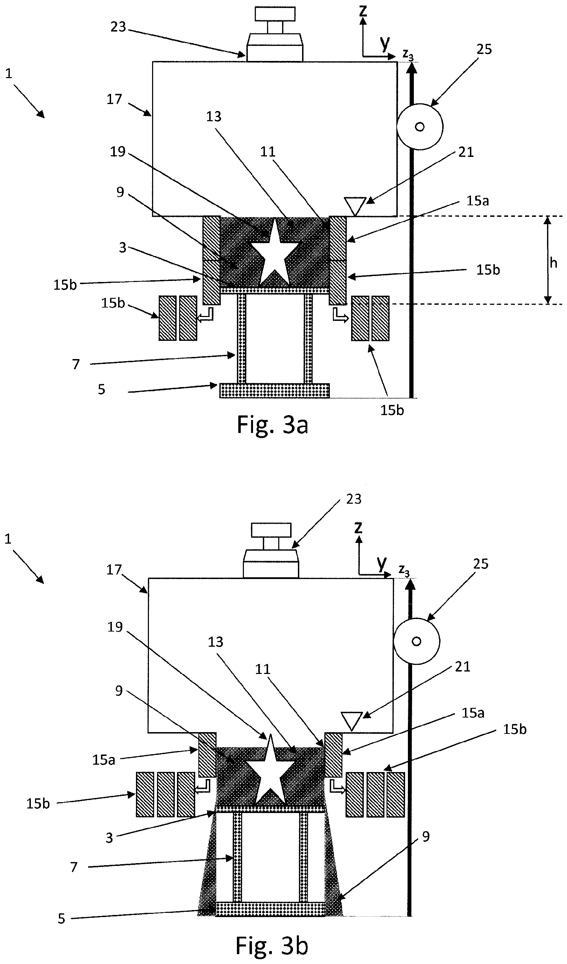

Die Figuren 3a und 3b zeigen die Vorrichtung 1 des ersten Ausführungsbeispiels nach Beendigung des Bauprozesses des Werkstücks 19. In den Figuren 3a und 3b ist eine erste Möglichkeit dargestellt, wie das Werkstück 19 von dem Rohstoffpulver 9 getrennt werden kann (sogenanntes Auspacken). Somit beschreiben die Figuren 3a und 3b Schritte eines erfindungsgemäßen Verfahrens, welches mit einer erfindungsgemäßen Vorrichtung 1 durchgeführt werden kann.

Die Figur 3a zeigt die Vorrichtung 1 in einem Zustand, in dem die Bestrahlungseinheit 23 durch die vertikale Bewegungseinrichtung 25 auf eine dritte Höhe z3 gefahren wurde. Die dritte Höhe z3 ist größer als die in Figur 1b dargestellte zweite Höhe z2. Das Werkstück 19 befindet sich hierbei in einem fertigen Zustand. Wie in Figur 3a exemplarisch gezeigt ist, wurden während des Bauprozesses eine Schicht weiterer Wandelemente 15b an die ersten Wandelemente 15a befestigt. Ferner ist es selbstverständlich möglich, dass mehrere Schichten von Wandelementen 15b während des Bauprozesses miteinander verbunden wurden.

Wie in Figur 3b gezeigt, werden diese Wandelemente 15b nun in umgekehrter Reihenfolge (von unten) wieder entfernt. Dies geschieht bei gleichbleibender Höhe z3 der Bestrahlungseinheit 23 bzw. der Prozesskammer 17. Da hierbei die Prozesskammerwand 11 von unten abgebaut wird, kann das sich auf dem Träger 3 befindliche Rohstoffpulver 9 seitlich von dem Träger 3 hinabrieseln. Nach Entfernen eines untersten Wandelements 15b können die weiteren oberhalb des untersten Wandelements 15b liegenden Wandelemente 15a, 15b entfernt werden, bis so viel Pulver wie möglich von dem Träger 3 hinabrieseln konnte. Ferner kann in manchen Ausführungsbeispielen in diesem Zustand das Werkstück 19 seitlich entnommen werden, bevor es vollständig von überschüssigem Rohstoffpulver 9 befreit wird. Alternativ kann jedoch auch der Träger 3 mitsamt dem darauf befindlichen Werkstück 19 (und gegebenenfalls verbleibendem restlichen Rohstoffpulver 9) entnommen werden.

Insbesondere können in manchen Ausführungsbeispielen auch die ersten Wandelemente 15a von der Prozesskammer 17 gelöst werden. In anderen Ausführungsbeispielen können die ersten Wandelemente 15a jedoch auch fest mit der Prozesskammer 17 verbunden sein.

Nachdem das Rohstoffpulver 9 und das Werkstück 19 von dem Träger 3 entfernt wurden kann die vertikale Bewegungseinrichtung 25 die Prozesskammer 17 und die daran befestigten Elemente wieder hinabfahren und ein neuer Bauprozess kann begonnen werden (siehe Figuren la und 1b).

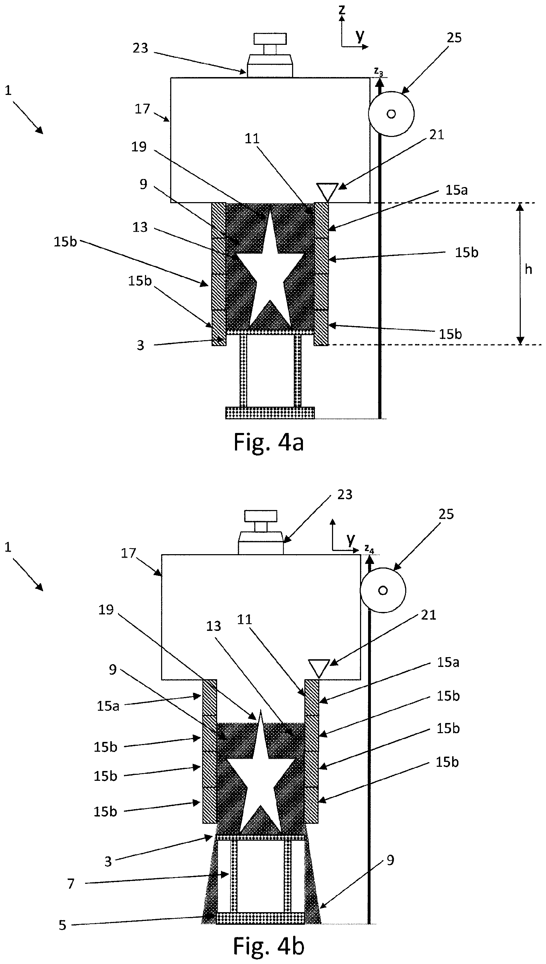

Die Figuren 4a und 4b zeigen die Vorrichtung 1 des ersten Ausführungsbeispiels nach Beendigung des Bauprozesses des Werkstücks 19. In den Figuren 4a und 4b ist eine zweite Möglichkeit dargestellt, wie das Werkstück 19 von dem Rohstoffpulver 9 getrennt werden kann (sogenanntes Auspacken). Somit beschreiben die Figuren 4a und 4b Schritte eines alternativen erfindungsgemäßen Verfahrens, welches mit einer erfindungsgemäßen Vorrichtung 1 durchgeführt werden kann.

In der Darstellung der Figur 4a befindet sich die Bestrahlungseinheit 23 nach Beendigung eines Bauprozesses des Werkstücks 19 auf einer dritten Höhe z3, ähnlich zu der Darstellung der Figur 3a, wobei die Höhe z3 der Figur 4a nicht der Höhe z3 der Figur 3a entsprechen muss. Beispielhaft ist in der Figur 4a dargestellt, dass unterhalb der ersten Wandelemente 15a drei Schichten weiterer Wandelemente 15b während des Bauprozesses angebracht wurden. Es können jedoch auch mehrere oder weniger Wandelemente 15b angebracht worden sein, abhängig von einer Höhe des Werkstücks 19 und abhängig von einer Höhe der jeweiligen Wandelemente 15b.

Wie in Figur 4b dargestellt, kann nach Beendigung des Bauprozesses die vertikale Bewegungseinrichtung 25 die Prozesskammer 17 mitsamt der daran befestigten Wandelemente 15a, 15b nach oben auf eine vierte Höhe z4 bewegen, sodass zwischen den untersten Wandelementen 15b der Bauzylinderwand 11 und dem Träger 3 ein Spalt entsteht, durch den Rohstoffpulver 9 seitlich von dem Träger 3 hinabrieseln kann. Durch weiteres Anheben der Wandelemente 15a, 15b kann der Spalt vergrößert werden, gegebenenfalls so weit, bis das Werkstück 19 seitlich von dem Träger 3 entnommen werden kann.

Anschließend wird die Prozesskammer 17 wieder in einen Ausgangszustand heruntergefahren und ein neuer Bauprozess kann begonnen werden. Hierbei werden entweder vor dem Herunterfahren oder während des Herunterfahrens die zuvor angebrachten Wandelemente 15b von unten nach oben wieder entfernt.

Das Verfahren der Figuren 3a/3b und das Verfahren der Figuren 4a/4b kann einerseits, wie oben beschrieben, von der Vorrichtung 1 des ersten Ausführungsbeispiels der Figuren 1a/1b durchgeführt werden. Ferner können diese Verfahren jedoch auch von der Vorrichtung 1 des zweiten Ausführungsbeispiels der Figuren 2a/2b durchgeführt werden, wenn zuvor die Bauzylinderhülle 27 von dem Träger 3 und/oder von der Prozesskammer 17 gelöst wurde oder vollständig entfernt wurde. Nach Lösen bzw. Entfernen der Bauzylinderhülle 27 kann das Verfahren, wie oben beschrieben und wie in den Figuren 3a/3b bzw. 4a/4b gezeigt, durchgeführt werden.

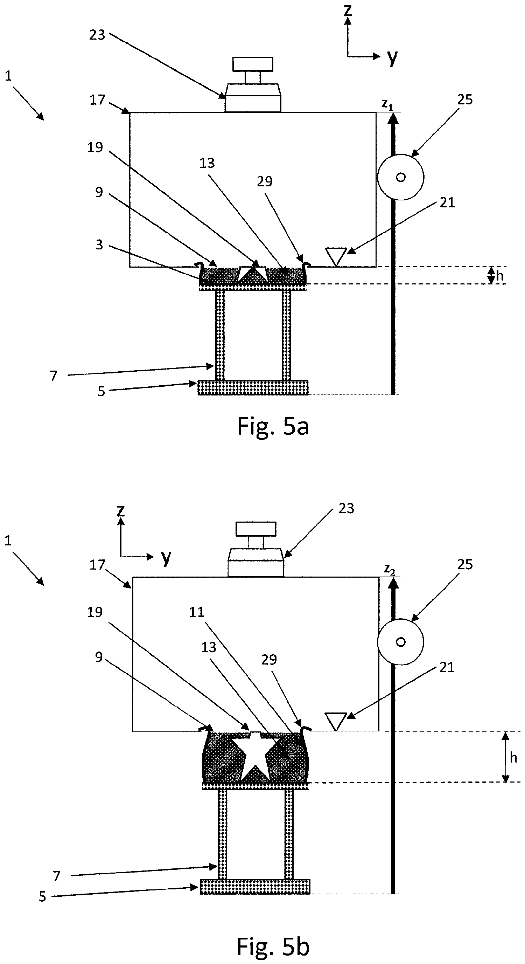

In den Figuren 5a und 5b wird ein drittes Ausführungsbeispiel einer erfindungsgemäßen Vorrichtung 1 in einer schematischen Seitenansicht dargestellt. Das dritte Ausführungsbeispiel ist hinsichtlich des zweiten Ausführungsbeispiels lediglich geringfügig abgeändert, sodass eine Beschreibung der identischen Merkmale der beiden Ausführungsbeispiele nicht wiederholt wird. Merkmale, welche mit denselben Bezugszeichen gekennzeichnet sind, erfüllen dieselbe Funktion wie im Hinblick auf das zweite Ausführungsbeispiel beschrieben.

Abweichend von der Vorrichtung des zweiten Ausführungsbeispiels weist die Vorrichtung 1 des dritten Ausführungsbeispiels keine Wandelemente auf. Die Bauzylinderwand 11 wird gemäß dem dritten Ausführungsbeispiel vielmehr von einer flexiblen Wand 29 aus dehnbarem Material gebildet. Die flexible Wand 29 ist hierbei ähnlich ausgestaltet und befestigt wie die Bauzylinderhülle 27 des zweiten Ausführungsbeispiels. Die flexible Wand 29 ist so vorgesehen, dass das Rohstoffpulver 9 direkt an die flexible Wand 29 angrenzt.

Wie in den Figuren 5a und 5b dargestellt, ist ein unterer Rand der flexiblen Wand 29 mit dem Träger 3 verbunden und ein oberer Rand der flexiblen Wand 29 wird von der vertikalen Bewegungseinrichtung 25 vertikal gemeinsam mit der Bestrahlungseinheit 23 bewegt. Der untere Rand der flexiblen Wand 29 ist an einem Rand des Trägers 3 befestigt. Der obere Rand der flexiblen Wand ist an einem unteren Bodenbereich der Prozesskammer 17 befestigt. Das Material der flexiblen Wand 29 ist pulverundurchlässig, um das Rohstoffpulver 9 davon abzuhalten, die Bauzylinderwand 11 zu durchdringen. Ferner kann die flexible Wand 29 für das Inertgas undurchlässig sein, um die Inertgasatmosphäre innerhalb des Bauzylinders 17 aufrecht zu erhalten.

Die flexible Wand 29 besteht aus einem dehnbaren Material. Das dehnbare Material kann beispielsweise ein flexibles Kunststoff- und/oder Gummi-Material umfassen. Durch die Dehnungsfähigkeit der flexiblen Wand 29 kann diese mit zunehmender Beabstandung von Prozesskammer 17 und Träger 3 während des Bauprozesses in z-Richtung expandieren (siehe Figur 5b). Eine möglicherweise mit der Dehnungsfähigkeit einhergehende Ausdehnung auch in x- und y-Richtung fällt hierbei möglichst gering aus. Insbesondere kann die flexible Wand 29 so ausgestaltet sein, dass die Dehnfähigkeit eine Vorzugsrichtung (vertikale Richtung bzw. z-Richtung) aufweist. Anders ausgedrückt kann die flexible Wand 29 so ausgestaltet sein, dass sie sich leichter (also unter geringerem Kraftaufwand) in z-Richtung als in x- und y-Richtung ausdehnen lässt.

Ein Bauprozess der Vorrichtung 1 gemäß dem zweiten Ausführungsbeispiel verläuft ähnlich zu dem Bauprozess der Vorrichtung 1 gemäß dem zweiten Ausführungsbeispiel, wobei jedoch keine weiteren Wandelemente an bereits vorhandene Wandelemente befestigt werden müssen, da die Bauzylinderwand 11 von der flexiblen Wand 29 bereitgestellt wird. Während dem Bauprozess erhöht sich eine Höhe h der Bauzylinderwand 11. Die Höhe h ist hierbei definiert als eine vertikale Höhe h der flexiblen Wand 29 zwischen einer unteren Befestigungsposition und einer oberen Befestigungsposition der flexiblen Wand 29. Beispielsweise kann die Höhe h zwischen einer Oberfläche des Trägers 3 und einer Unterseite der Prozesskammer 17 gemessen werden.

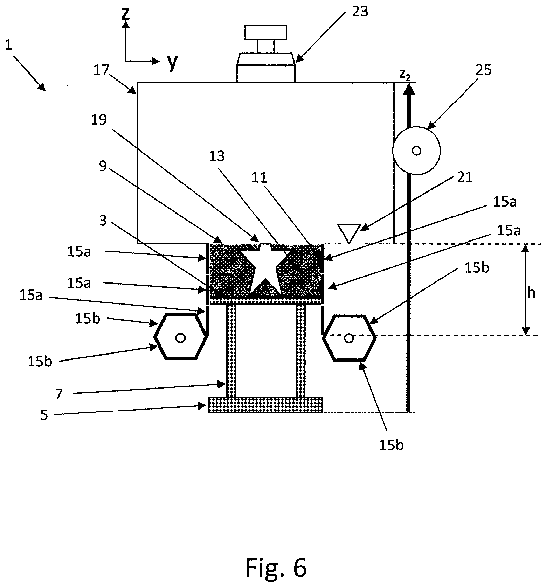

In der Figur 6 wird ein viertes Ausführungsbeispiel einer erfindungsgemäßen Vorrichtung 1 in einer schematischen Seitenansicht dargestellt. Das vierte Ausführungsbeispiel ist hinsichtlich des ersten Ausführungsbeispiels lediglich geringfügig abgeändert, sodass eine Beschreibung der identischen Merkmale der beiden Ausführungsbeispiele nicht wiederholt wird. Merkmale, welche mit denselben Bezugszeichen gekennzeichnet sind, erfüllen dieselbe Funktion wie im Hinblick auf das erste Ausführungsbeispiel beschrieben.

Abweichend von der Vorrichtung des ersten Ausführungsbeispiels weist die Vorrichtung 1 des dritten Ausführungsbeispiels keine lösbar verbindbaren Wandelemente auf. Die Wandelemente 15a und 15b der Vorrichtung 1 des vierten Ausführungsbeispiels sind vielmehr mittels flexibler Verbindungen (nicht dargestellt) miteinander verbunden.

Ein erster Teil der Wandelemente (Wandelemente 15a) befindet sich hierbei in einem vertikalen Zustand und bildet in diesem vertikalen Zustand die sich im Wesentlichen vertikal erstreckende Bauzylinderwand 11. Ein zweiter Teil der Wandelemente (Wandelemente 15b) befindet sich in einem aufgerollten Zustand und bildet in diesem aufgerollten Zustand nicht die Bauzylinderwand 11. Wie in Figur 6 dargestellt, sind die Wandelemente 15b im aufgerollten Zustand auf einer Rolle aufgerollt bzw. aufgewickelt. Die Wandelemente 15b können bei Bedarf aus dem aufgerollten Zustand in den vertikalen Zustand ausgerollt werden, sodass die vertikale Höhe h der Bauzylinderwand 11 vergrößert wird.

Die vertikale Höhe h ergibt sich im vierten Ausführungsbeispiel als eine Summe der vertikalen Höhen der Wandelemente 15a im vertikalen Zustand. Diese Höhe h kann bei Bedarf vergrößert werden, indem Wandelemente 15b abgerollt werden.

Wie in der Figur 6 dargestellt, wird ein oberstes Wandelement 15a der Wandelemente 15a im vertikalen Zustand von der vertikalen Bewegungseinrichtung 25 vertikal gemeinsam mit der Bestrahlungseinheit 23 bewegt. Dieses oberste Wandelement 15a ist hierbei an einem unteren Bodenbereich der Prozesskammer 17 befestigt. Gleichzeitig werden bei diesem Bewegungsvorgang die Rollen mit den Wandbereichen 15b im aufgerollten Zustand gedreht, sodass sich weitere Wandelemente 15a, 15b von der Rolle abrollen können. Anders ausgedrückt gehen hierbei Wandelemente 15b von einem aufgerollten Zustand in einen vertikalen Zustand über.

Ein Bauprozess der Vorrichtung 1 gemäß dem vierten Ausführungsbeispiel verläuft ähnlich zu dem Bauprozess der Vorrichtung 1 gemäß dem ersten Ausführungsbeispiel, wobei jedoch anstatt des Verbindens weiterer Wandelemente, im Ausführungsbeispiel der Figur 6 weitere Wandelemente von unten automatisch aus dem aufgerollten Zustand abgewickelt bzw. abgerollt werden können. Während des Bauprozesses erhöht sich somit eine Höhe h der Bauzylinderwand 11.

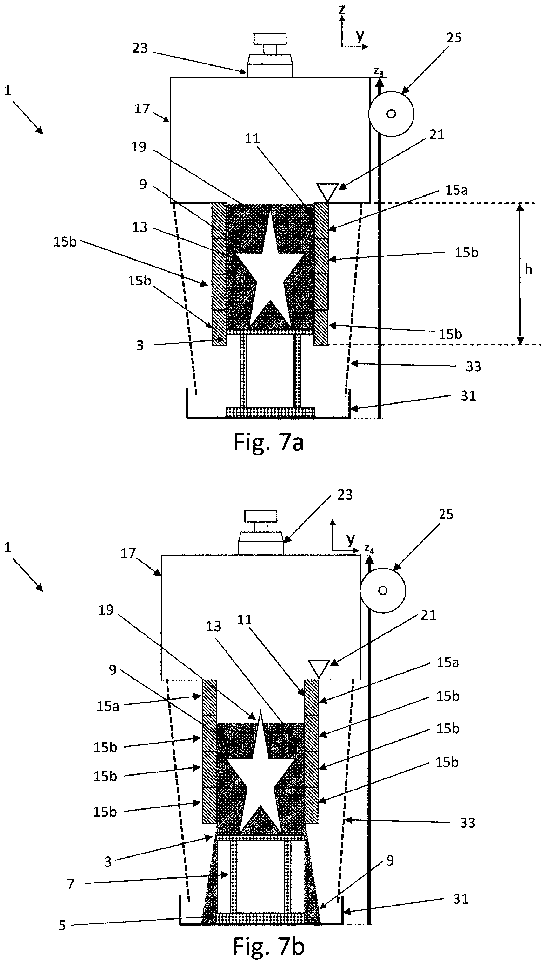

In den Figuren 7a und 7b ist eine Abwandlung des ersten Ausführungsbeispiels der Figuren 4a und 4b dargestellt. Sämtliche in den Figuren 7a und 7b dargestellten Elemente entsprechen den Elementen der Figuren 4a und 4b bzw. der Figuren 1a und 1b mit gleichem Bezugszeichen. Zusätzlich zu dem ersten Ausführungsbeispiel der Figuren 4a und 4b umfasst die Vorrichtung 1 der Abwandlung eine Auffangwanne 31 und eine Abdichtungseinrichtung 33. Die Auffangwanne 31 und die Abdichtungseinrichtung 33 sind so angeordnet, dass die Abdichtungseinrichtung 33 das zu dem in Figur 7b dargestellten Zeitpunkt seitlich von dem Träger 3 hinabrieselnde Rohstoffpulver 9 in die Auffangwanne 31 leitet.

In der Darstellung der Figuren 7a und 7b steht das Fundament 5 der Vorrichtung innerhalb der Auffangwanne 31. Alternativ kann sich die Auffangwanne beispielsweise ringförmig um das Fundament 5 erstecken. Ferner können mehrere Auffangwannen 31 an mehreren Seiten des Fundaments 5 vorgesehen sein. Beispielsweise können vier Auffangwannen 31 an den vier Seiten eines rechteckigen Fundaments 5 vorgesehen sein.

Ferner ist in der Darstellung der Figuren 7a und 7b ein erstes Ende (oberes Ende) der Abdichtungseinrichtung 33 an der Unterseite der Prozesskammer 17 angebracht. Die Befestigung kann hierbei lösbar oder nicht lösbar ausgestaltet sein. Ein zweites Ende (unteres Ende) der Abdichtungseinrichtung 33 ist an der Auffangwanne 31 befestigt, sodass sich die Abdichtungseinrichtung 33 beispielsweise schlauchförmig zwischen Auffangwanne 31 und Prozesskammer 17 erstreckt. Die Abdichtungseinrichtung 33 ist aus flexiblem Material (beispielsweise in Form eines Faltenbalgs), sodass sich die vertikale Höhe der Abdichtungseinrichtung 33 beim Bewegen der vertikalen Bewegungseinrichtung 25 verändern kann.

Alternativ zur Anbringung an der Unterseite der Prozesskammer 17 kann das erste Ende der Abdichtungseinrichtung 33 auch an einer Unterseite eines untersten Wandelements 15b angebracht sein. Diese Verbindung kann beispielsweise lösbar sein, sodass die Abdichtungseinrichtung 33 erst nach Beendigung des Bauprozesses an einem oder mehreren der untersten Wandelemente 15b befestigt wird.

Die Abdichtungseinrichtung 33 ist lediglich beispielhaft im Zusammenhang mit dem ersten Ausführungsbeispiel der Figuren 1a und 1b bzw. 7a und 7b dargestellt. Eine Abdichtungseinrichtung 33 und eine Auffangwanne 31 können jedoch auch auf ähnliche Weise mit jedem einzelnen der weiteren hierin beschriebenen Ausführungsbeispiele verwendet werden. Gemäß den Figuren 2a und 2b umfasst die Vorrichtung 1 eine innere Bauzylinderhülle 27. Auch im Zusammenhang mit diesem Ausführungsbeispiel kann eine Abdichtungseinrichtung 33 vorgesehen sein, um nach einem zumindest teilweisen Entfernen der Bauzylinderhülle 27 von dem Träger 3 hinabrieselndes Rohstoffpulver 9 in einer Auffangwanne 31 aufzufangen. Dasselbe gilt für die flexible Wand 29 gemäß dem Ausführungsbeispiel der Figuren 5a und 5b. Gemäß den Figuren 3a und 3b werden nach Beendigung des Bauprozesses die untersten Wandelemente 3b abgenommen. Auch in diesem Fall kann eine Abdichtungseinrichtung 33 das hinabrieselnde Rohstoffpulver 9 entsprechend in eine Auffangwanne 31 leiten. Ferner kann auch in dem Ausführungsbeispiel der Figur 6 eine Abdichtungseinrichtung 33 vorgesehen sein, wobei nach Beendigung des Bauprozesses eines oder mehrere der Wandelemente 15a, 15b gelöst werden können, sodass das Rohstoffpulver 9 seitlich hinabrieseln kann und von der Abdichtungseinrichtung 33 in eine Auffangwanne 31 geleitet wird.

Hinsichtlich sämtlicher hierin beschriebener Ausführungsbeispiele gilt das Folgende. Die Vorrichtung 1 ist jeweils nur in einer Seitenansicht dargestellt, sodass die Vorrichtung 1 und insbesondere der Bauzylinder 13 mit seiner Bauzylinderwand 11 lediglich zweidimensional dargestellt ist. Der Fachmann wird erkennen, dass der Bauzylinder auch in eine Richtung senkrecht zur Zeichenebene begrenzt ist und dass auch in diesem Bereich die Bauzylinderwand 11 vorgesehen ist. Konkret bedeutet dies beispielsweise für das erste und zweite Ausführungsbeispiel, dass auch für die Begrenzung senkrecht zur Zeichenebene Wandelemente 15a, 15b und ggf. eine Bauzylinderhülle 27 vorgesehen sind. Für das vierte Ausführungsbeispiel bedeutet dies, dass auch für die Begrenzung senkrecht zur Zeichenebene aufrollbare Wandelemente 15a, 15b vorgesehen sind.

Durch das Vorsehen einer Bauzylinderwand 11, deren Höhe h während eines Bauprozesses vergrößert werden kann, kann ein theoretisch unendlich hoher Bauzylinder 13 erreicht werden und somit können sehr große Werkstücke 19 (d. h. sehr hohe Werkstücke 19 mit großer Ausdehnung in z-Richtung) hergestellt werden. Die Technik der vorliegenden Offenbarung ist somit flexibel, modular und ermöglicht eine Herstellung eines sehr großen Werkstücks 19 mithilfe einer Vorrichtung, welche nicht dauerhaft (beispielsweise nicht zu Beginn des Bauprozesses) einen entsprechend dimensionierten Bauzylinder vorhalten muss. Unter anderem kann somit eine kompakte Bauweise der Vorrichtung 1 erreicht werden.

## Patentansprüche

1. Vorrichtung (1) zum Herstellen von dreidimensionalen Werkstücken (19), umfassend:
- einen Träger (3) zum Aufnehmen von Rohstoffpulver (9),
- eine Bestrahlungseinheit (23) zum selektiven Bestrahlen des auf den Träger (3) aufgetragenen Rohstoffpulvers (9) mit elektromagnetischer Strahlung oder Teilchenstrahlung, um auf dem Träger (3) ein aus dem Rohstoffpulver (9) gefertigtes Werkstück (19) durch ein generatives Schichtbauverfahren herzustellen,
- eine vertikale Bewegungseinrichtung (25), welche dazu eingerichtet ist, die Bestrahlungseinheit (23) vertikal bezüglich des Trägers (3) zu bewegen,
- eine sich vertikal erstreckende Bauzylinderwand (11), welche eine seitliche Begrenzung für das auf den Träger (3) aufgetragene Rohstoffpulver darstellt, wobei die Bauzylinderwand (11) dazu eingerichtet ist, ihre vertikale Höhe (h) während eines Bauprozesses zu vergrößern, und
- eine Mehrzahl von Wandelementen (15a, 15b), welche dazu eingerichtet sind, lösbar miteinander verbunden zu werden, sodass sie in einem verbundenen Zustand die sich vertikal erstreckende Bauzylinderwand (11) bilden.

2. Vorrichtung (1) nach Anspruch 1, wobei die Wandelemente (15a, 15b) so miteinander verbindbar sind, dass im verbundenen Zustand mindestens zwei der Wandelemente (15a, 15b) in vertikaler Richtung übereinander angeordnet sind.

3. Vorrichtung (1) nach Anspruch 1 oder 2, wobei die Wandelemente (15a, 15b) so miteinander verbindbar sind, dass im verbundenen Zustand mindestens zwei der Wandelemente (15a, 15b) in horizontaler Richtung nebeneinander angeordnet sind.

4. Vorrichtung (1) nach einem der Ansprüche 1 bis 3, wobei die vertikale Bewegungseinrichtung (25) dazu eingerichtet ist, die Bauzylinderwand (11) gemeinsam mit der Bestrahlungseinheit (23) vertikal bezüglich des Trägers (3) zu bewegen.

5. Vorrichtung (1) nach einem der Ansprüche 1 bis 3, ferner umfassend eine weitere vertikale Bewegungseinrichtung, welche dazu eingerichtet ist, die Bauzylinderwand (11) vertikal bezüglich des Trägers (3) zu bewegen.

6. Vorrichtung (1) nach einem der Ansprüche 1 bis 5, ferner umfassend eine innere Bauzylinderhülle (27), wobei ein unterer Rand der Bauzylinderhülle (27) mit dem Träger (3) verbunden ist und ein oberer Rand der Bauzylinderhülle (27) von der vertikalen Bewegungseinrichtung (25) vertikal gemeinsam mit der Bestrahlungseinheit (23) bewegbar ist, wobei die innere Bauzylinderhülle (27) dazu eingerichtet ist, im verbundenen Zustand der Wandelemente (15a, 15b) eine innere Wand für das auf den Träger aufgetragene Rohstoffpulver (9) darzustellen, wobei das Rohstoffpulver (9) direkt an die Bauzylinderhülle (27) angrenzt.

7. Vorrichtung (1) nach Anspruch 6, wobei die innere Bauzylinderhülle (27) mindestens eines der folgenden Elemente umfasst:
- eine flexible Hülle aus dehnbarem Material,
- einen Faltenbalg, und/oder
- mehrere Wandsegmente, welche dazu eingerichtet sind, in einem eingefahrenen Zustand ineinander geschachtelt gelagert zu werden und teleskopmäßig in einen ausgefahrenen Zustand ausgefahren zu werden.

8. Vorrichtung (1) nach einem der Ansprüche 1 bis 7, ferner umfassend eine Verbindungseinrichtung, welche dazu eingerichtet ist, die Wandelemente (15a, 15b) während eines Bauprozesses miteinander zu verbinden.

9. Vorrichtung (1) zum Herstellen von dreidimensionalen Werkstücken (19), umfassend:
- einen Träger (3) zum Aufnehmen von Rohstoffpulver (9),
- eine Bestrahlungseinheit (23) zum selektiven Bestrahlen des auf den Träger (3) aufgetragenen Rohstoffpulvers (9) mit elektromagnetischer Strahlung oder Teilchenstrahlung, um auf dem Träger (3) ein aus dem Rohstoffpulver (9) gefertigtes Werkstück (19) durch ein generatives Schichtbauverfahren herzustellen,
- eine vertikale Bewegungseinrichtung (25), welche dazu eingerichtet ist, die Bestrahlungseinheit (23) vertikal bezüglich des Trägers (3) zu bewegen,
- eine sich vertikal erstreckende Bauzylinderwand (11), welche eine seitliche Begrenzung für das auf den Träger (3) aufgetragene Rohstoffpulver darstellt, wobei die Bauzylinderwand (11) dazu eingerichtet ist, ihre vertikale Höhe (h) während eines Bauprozesses zu vergrößern, und
- eine Mehrzahl von Wandelementen (15a, 15b), welche mittels flexibler Verbindungen miteinander verbunden sind, wobei sich ein erster Teil der Wandelemente (15a) in einem vertikalen Zustand befindet, wobei die Wandelemente des ersten Teils im vertikalen Zustand die sich vertikal erstreckende Bauzylinderwand bilden, und wobei sich ein zweiter Teil der Wandelemente (15b) in einem aufgerollten Zustand befindet, wobei die Wandelemente des zweiten Teils im aufgerollten Zustand nicht die vertikal erstreckende Bauzylinderwand bilden, und wobei die Mehrzahl von Wandelementen dazu eingerichtet ist, dass Wandelemente aus dem aufgerollten Zustand in den vertikalen Zustand ausgerollt werden können, sodass die vertikale Höhe (h) der Bauzylinderwand (11) vergrößert wird.

10. Vorrichtung (1) zum Herstellen von dreidimensionalen Werkstücken (19), umfassend:
- einen Träger (3) zum Aufnehmen von Rohstoffpulver (9),
- eine Bestrahlungseinheit (23) zum selektiven Bestrahlen des auf den Träger (3) aufgetragenen Rohstoffpulvers (9) mit elektromagnetischer Strahlung oder Teilchenstrahlung, um auf dem Träger (3) ein aus dem Rohstoffpulver (9) gefertigtes Werkstück (19) durch ein generatives Schichtbauverfahren herzustellen,
- eine vertikale Bewegungseinrichtung (25), welche dazu eingerichtet ist, die Bestrahlungseinheit (23) vertikal bezüglich des Trägers (3) zu bewegen,
- eine sich vertikal erstreckende Bauzylinderwand (11), welche eine seitliche Begrenzung für das auf den Träger (3) aufgetragene Rohstoffpulver darstellt, wobei die Bauzylinderwand (11) dazu eingerichtet ist, ihre vertikale Höhe (h) während eines Bauprozesses zu vergrößern,
wobei die Bauzylinderwand (11) von einer flexiblen Wand (29) aus dehnbarem Material gebildet wird, wobei ein unterer Rand der flexiblen Wand (29) mit dem Träger (3) verbunden ist und ein oberer Rand der flexiblen Wand (29) von der vertikalen Bewegungseinrichtung (25) vertikal gemeinsam mit der Bestrahlungseinheit (23) bewegbar ist.

11. Vorrichtung (1) nach einem der Ansprüche 1 bis 10, ferner umfassend:
- eine Auffangwanne (31) zum Auffangen von Rohstoffpulver (9), welches nach Beendigung eines Bauprozesses und nach einem zumindest teilweisen Anheben oder Entfernen der Bauzylinderwand seitlich von dem Träger (3) hinabrieselt; und
- eine Abdichtungseinrichtung (33), welche dazu eingerichtet ist, das seitlich von dem Träger hinabrieselndes Rohstoffpulver (9) in die Auffangwanne (31) zu leiten.

12. Verfahren zum Herstellen von dreidimensionalen Werkstücken (19) mit einer Vorrichtung (1) zum Herstellen von dreidimensionalen Werkstücken (19), wobei das Verfahren umfasst:
- Auftragen von Rohstoffpulver (9) auf einen Träger (3),
- selektives Bestrahlen des auf den Träger (3) aufgetragenen Rohstoffpulvers (9) mit elektromagnetischer Strahlung oder Teilchenstrahlung durch eine Bestrahlungseinheit (23), um auf dem Träger (3) ein aus dem Rohstoffpulver (9) gefertigtes Werkstück (19) durch ein generatives Schichtbauverfahren herzustellen,
- vertikales Bewegen der Bestrahlungseinheit (23) bezüglich des Trägers (3) durch eine vertikale Bewegungseinrichtung (25), und
- Vergrößern, während eines Bauprozesses, einer vertikalen Höhe (h) einer sich vertikal erstreckende Bauzylinderwand (11) der Vorrichtung (1), welche eine seitliche Begrenzung für das auf den Träger (3) aufgetragene Rohstoffpulver darstellt,
wobei der Schritt des Vergrößerns umfasst lösbares Verbinden einer Mehrzahl von Wandelementen (15a, 15b) miteinander, sodass sie in einem verbundenen Zustand die sich vertikal erstreckende Bauzylinderwand (11) bilden.

13. Verfahren nach Anspruch 12, ferner umfassend:
- Entfernen mindestens eines der Wandelemente (15b), wobei das entfernte Wandelement (15b) eines der untersten Wandelemente (15b) der Bauzylinderwand (11) darstellt, sodass Rohstoffpulver (9) seitlich von dem Träger (3) hinabrieseln kann.

14. Verfahren nach Anspruch 12 oder 13, ferner umfassend:
- vertikales Bewegen der Bauzylinderwand (11) nach oben, sodass zwischen einem untersten Wandelement (15b) der Bauzylinderwand (11) und dem Träger (3) ein Spalt entsteht, durch den Rohstoffpulver (9) seitlich von dem Träger (3) hinabrieseln kann.

15. Verfahren nach Anspruch 13 oder 14, ferner umfassend:
- Auffangen des hinabrieselnden Rohstoffpulvers (9) in einer Auffangwanne (31); und
- Leiten des hinabrieselnden Rohstoffpulvers (9) in die Auffangwanne (31) mithilfe einer Abdichtungseinrichtung (33).

16. Verfahren zum Herstellen von dreidimensionalen Werkstücken (19) mit einer Vorrichtung (1) zum Herstellen von dreidimensionalen Werkstücken (19), wobei das Verfahren umfasst:
- Auftragen von Rohstoffpulver (9) auf einen Träger (3),
- selektives Bestrahlen des auf den Träger (3) aufgetragenen Rohstoffpulvers (9) mit elektromagnetischer Strahlung oder Teilchenstrahlung durch eine Bestrahlungseinheit (23), um auf dem Träger (3) ein aus dem Rohstoffpulver (9) gefertigtes Werkstück (19) durch ein generatives Schichtbauverfahren herzustellen,
- vertikales Bewegen der Bestrahlungseinheit (23) bezüglich des Trägers (3) durch eine vertikale Bewegungseinrichtung (25), und
- Vergrößern, während eines Bauprozesses, einer vertikalen Höhe (h) einer sich vertikal erstreckende Bauzylinderwand (11) der Vorrichtung (1), welche eine seitliche Begrenzung für das auf den Träger (3) aufgetragene Rohstoffpulver darstellt,
wobei eine Mehrzahl von Wandelementen vorgesehen sind, welche mittels flexibler Verbindungen miteinander verbunden sind, wobei sich ein erster Teil der Wandelemente in einem vertikalen Zustand befindet, wobei die Wandelemente des ersten Teils im vertikalen Zustand die sich im Wesentlichen vertikal erstreckende Bauzylinderwand bilden, und wobei sich ein zweiter Teil der Wandelemente in einem aufgerollten Zustand befindet, wobei die Wandelemente des zweiten Teils im aufgerollten Zustand nicht die im Wesentlichen vertikal erstreckende Bauzylinderwand bilden, und
wobei das Verfahren ferner umfasst Ausrollen von Wandelementen aus dem aufgerollten Zustand in den vertikalen Zustand, sodass die vertikale Höhe der Bauzylinderwand vergrößert wird.

17. Verfahren zum Herstellen von dreidimensionalen Werkstücken (19) mit einer Vorrichtung (1) zum Herstellen von dreidimensionalen Werkstücken (19), wobei das Verfahren umfasst:
- Auftragen von Rohstoffpulver (9) auf einen Träger (3),
- selektives Bestrahlen des auf den Träger (3) aufgetragenen Rohstoffpulvers (9) mit elektromagnetischer Strahlung oder Teilchenstrahlung durch eine Bestrahlungseinheit (23), um auf dem Träger (3) ein aus dem Rohstoffpulver (9) gefertigtes Werkstück (19) durch ein generatives Schichtbauverfahren herzustellen,
- vertikales Bewegen der Bestrahlungseinheit (23) bezüglich des Trägers (3) durch eine vertikale Bewegungseinrichtung (25), und
- Vergrößern, während eines Bauprozesses, einer vertikalen Höhe (h) einer sich vertikal erstreckende Bauzylinderwand (11) der Vorrichtung (1), welche eine seitliche Begrenzung für das auf den Träger (3) aufgetragene Rohstoffpulver darstellt,
wobei die Bauzylinderwand ferner von einer flexiblen Wand aus dehnbarem Material gebildet ist, wobei ein unterer Rand der flexiblen Wand mit dem Träger verbunden ist, und
wobei das Verfahren ferner umfasst vertikales Bewegen eines oberen Rands der flexiblen Wand von der vertikalen Bewegungseinrichtung gemeinsam mit der Bestrahlungseinheit.

## Claims

1. A device (1) for producing three-dimensional workpieces (19), comprising:
- a carrier (3) for receiving raw material powder (9),
- an irradiation unit (23) for selectively irradiating the raw material powder applied to the carrier (3) with electromagnetic radiation or particle radiation, in order to produce on the carrier (3) a workpiece (19) manufactured from the raw material powder (9) by an additive layer building method,
- a vertical movement device (25) which is adapted to move the irradiation unit (23) vertically with respect to the carrier (3),
- a vertically extending build cylinder wall (11) which constitutes a lateral delimitation for the raw material powder applied to the carrier (3), wherein the build cylinder wall (11) is adapted to increase its vertical height (h) during a build process, and
- a plurality of wall elements (15a, 15b) which are adapted to be detachably connected together so that, in a connected state, they form the vertically extending build cylinder wall (11).

2. The device (1) according to claim 1, wherein the wall elements (15a, 15b) can be connected together in such a manner that, in the connected state, at least two of the wall elements (15a, 15b) are arranged one above the other in the vertical direction.

3. The device (1) according to claim 1 or 2, wherein the wall elements (15a, 15b) can be connected together in such a manner that, in the connected state, at least two of the wall elements (15a, 15b) are arranged side by side in the horizontal direction.

4. The device (1) according to any one of claims 1 to 3, wherein the vertical movement device (25) is adapted to move the build cylinder wall (11) vertically with respect to the carrier (3) together with the irradiation unit (23).

5. The device (2) according to any one of claims 1 to 3, further comprising a further vertical movement device which is adapted to move the build cylinder wall (11) vertically with respect to the carrier (3).

6. The device (1) according to any one of claims 1 to 5, further comprising an inner build cylinder sleeve(27), wherein a lower edge of the build cylinder sleeve (27) is connected to the carrier (3) and an upper edge of the build cylinder sleeve (27) is movable vertically by the vertical movement device (25) together with the irradiation unit (23), wherein the inner build cylinder sleeve (27) is adapted to constitute, in the connected state of the wall elements (15a, 15b), an inner wall for the raw material powder (9) applied to the carrier (3), wherein the raw material powder (9) directly adjoins the build cylinder sleeve (27).

7. The device (1) according to claim 6, wherein the inner build cylinder sleeve (27) comprises at least one of the following elements:
- a flexible sleeve of extensible material,
- a corrugated bellows, and/or
- a plurality of wall segments which are adapted to be stored nested one inside the other in a retracted state and to be deployed in the manner of a telescope into a deployed state.

8. The device (1) according to any one of claims 1 to 7, further comprising a connecting device which is adapted to connect the wall elements (15a, 15b) together during a build process.

9. A device (1) for producing three-dimensional workpieces (19), comprising:
- a carrier (3) for receiving raw material powder (9),
- an irradiation unit (23) for selectively irradiating the raw material powder applied to the carrier (3) with electromagnetic radiation or particle radiation, in order to produce on the carrier (3) a workpiece (19) manufactured from the raw material powder (9) by an additive layer building method,
- a vertical movement device (25) which is adapted to move the irradiation unit (23) vertically with respect to the carrier (3),
- a vertically extending build cylinder wall (11) which constitutes a lateral delimitation for the raw material powder applied to the carrier (3), wherein the build cylinder wall (11) is adapted to increase its vertical height (h) during a build process, and
- a plurality of wall elements (15a, 15b) which are connected together by means of flexible connections, wherein a first portion of the wall elements (15a) is in a vertical state, wherein the wall elements of the first portion in the vertical state form the vertically extending build cylinder wall, and wherein a second portion of the wall elements (15b) is in a rolled-up state, wherein the wall elements of the second portion in the rolled-up state do not form the vertically extending build cylinder wall, and wherein the plurality of wall elements is so adapted that wall elements can be unrolled from the rolled-up state into the vertical state, so that the vertical height (h) of the build cylinder wall (11) is increased.

10. A device (1) for producing three-dimensional workpieces (19), comprising:
- a carrier (3) for receiving raw material powder (9),
- an irradiation unit (23) for selectively irradiating the raw material powder applied to the carrier (3) with electromagnetic radiation or particle radiation, in order to produce on the carrier (3) a workpiece (19) manufactured from the raw material powder (9) by an additive layer building method,
- a vertical movement device (25) which is adapted to move the irradiation unit (23) vertically with respect to the carrier (3),
- a vertically extending build cylinder wall (11) which constitutes a lateral delimitation for the raw material powder applied to the carrier (3), wherein the build cylinder wall (11) is adapted to increase its vertical height (h) during a build process,
wherein the build cylinder wall (11) is formed by a flexible wall (29) of extensible material, wherein a lower edge of the flexible wall (29) is connected to the carrier (3) and an upper edge of the flexible wall (29) is movable vertically by the vertical movement device (25) together with the irradiation unit (23).

11. The device (1) according to anyone of claims 1 to 10, further comprising:
- a collecting tray (31) for collecting raw material powder (9) which trickles down from the carrier (3) at the sides after completion of a build process and after the build cylinder wall has been at least partially lifted or removed; and
- a sealing device (33) which is adapted to guide into the collecting tray (31) the raw material powder (9) which trickles down from the carrier at the sides.

12. A method for producing three-dimensional workpieces (19) using a device (1) for producing three-dimensional workpieces (19), wherein the method comprises:
- applying raw material powder (9) to a carrier (3),
- selectively irradiating the raw material powder applied to the carrier (3) with electromagnetic radiation or particle radiation by an irradiation unit (23) in order to produce on the carrier (3) a workpiece (19) manufactured from the raw material powder (9) by an additive layer building method,
- moving the irradiation unit (23) vertically with respect to the carrier (3) by means of a vertical movement device (25), and
- increasing, during a build process, a vertical height (h) of a vertically extending build cylinder wall (11) of the device (1) which constitutes a lateral delimitation for the raw material powder applied to the carrier (3),
wherein the increasing step comprises detachably connecting a plurality of wall elements (15a, 15b) together so that, in a connected state, they form the vertically extending build cylinder wall (11).

13. The method according to claim 12, further comprising:
- removing at least one of the wall elements (15b), wherein the removed wall element (15b) is one of the lowermost wall elements (15b) of the build cylinder wall (11), so that raw material powder (9) is able to trickle down from the carrier (3) at the sides.

14. The method according to claim 12 or 13, further comprising:
- moving the build cylinder wall (11) vertically upwards, so that a gap forms between a lowermost wall element (15b) of the build cylinder wall (11) and the carrier (3), through which gap raw material powder (9) is able to trickle down from the carrier (3) at the sides.

15. The method according to claim 13 or 14, further comprising:
- collecting in a collecting tray (31) the raw material powder (9) which trickles down; and
- guiding the raw material powder (9) which trickles down into the collecting tray (31) by means of a sealing device (33).

16. A method for producing three-dimensional workpieces (19) using a device (1) for producing three-dimensional workpieces (19), wherein the method comprises:
- applying raw material powder (9) to a carrier (3),
- selectively irradiating the raw material powder applied to the carrier (3) with electromagnetic radiation or particle radiation by an irradiation unit (23) in order to produce on the carrier (3) a workpiece (19) manufactured from the raw material powder (9) by an additive layer building method,
- moving the irradiation unit (23) vertically with respect to the carrier (3) by means of a vertical movement device (25), and
- increasing, during a build process, a vertical height (h) of a vertically extending build cylinder wall (11) of the device (1) which constitutes a lateral delimitation for the raw material powder applied to the carrier (3),
wherein a plurality of wall elements is provided which are connected together by means of flexible connections, wherein a first portion of the wall elements is in a vertical state, wherein the wall elements of the first portion in the vertical state form the vertically extending build cylinder wall, and wherein a second portion of the wall elements is in a rolled-up state, wherein the wall elements of the second portion in the rolled-up state do not form the vertically extending build cylinder wall, and
wherein the method further comprises unrolling of wall elements from the rolled-up state into the vertical state, so that the vertical height of the build cylinder wall is increased.

17. A method for producing three-dimensional workpieces (19) using a device (1) for producing three-dimensional workpieces (19), wherein the method comprises:
- applying raw material powder (9) to a carrier (3),
- selectively irradiating the raw material powder applied to the carrier (3) with electromagnetic radiation or particle radiation by an irradiation unit (23) in order to produce on the carrier (3) a workpiece (19) manufactured from the raw material powder (9) by an additive layer building method,
- moving the irradiation unit (23) vertically with respect to the carrier (3) by means of a vertical movement device (25), and
- increasing, during a build process, a vertical height (h) of a vertically extending build cylinder wall (11) of the device (1) which constitutes a lateral delimitation for the raw material powder applied to the carrier (3),
wherein the build cylinder wall further is formed by a flexible wall of extensible material, wherein a lower edge of the flexible wall is connected to the carrier and
wherein the method further comprises vertically moving an upper edge of the flexible wall (29) by the vertical movement device together with the irradiation unit.

## Revendications

1. Dispositif (1) de fabrication de pièces tridimensionnelles (19), comprenant :
- un support (3) destiné à recevoir de la poudre de matière première (9),
- une unité d'irradiation (23) destinée à irradier sélectivement la poudre de matière première (9) appliquée sur le support (3) avec un rayonnement électromagnétique ou un rayonnement de particules pour fabriquer sur le support (3) une pièce (19) réalisée à partir de la poudre de matière première (9) par un procédé de construction générative par couches,
- un moyen de déplacement vertical (25) conçu pour déplacer l'unité d'irradiation (23) verticalement par rapport au support (3)
- une paroi de cylindre de construction s'étendant verticalement (11) qui constitue une délimitation latérale pour la poudre de matière première appliquée sur le support (3), la paroi de cylindre de construction (11) étant conçue pour augmenter sa hauteur verticale (h) pendant un processus de construction, et
- une pluralité d'éléments de paroi (15a, 15b) conçu pour être reliés de manière détachable les uns aux autres de sorte que, dans un état relié, ils forment la paroi de cylindre de construction s'étendant verticalement (11).

2. Dispositif (1) selon la revendication 1, dans lequel les éléments de paroi (15a, 15b) peuvent être reliés les uns aux autres de telle sorte que, dans l'état relié, au moins deux des éléments de paroi (15a, 15b) soient disposés l'un au-dessus de l'autre dans la direction verticale.

3. Dispositif (1) selon la revendication 1 ou 2, dans lequel les éléments de paroi (15a, 15b) peuvent être reliés les uns aux autres de telle sorte que, dans l'état relié, au moins deux des éléments de paroi (15a, 15b) soient disposés l'un à côté de l'autre dans la direction horizontale.

4. Dispositif (1) selon l'une des revendications 1 à 3, dans lequel le moyen de déplacement vertical (25) est conçu pour déplacer la paroi de cylindre de construction (11) en commun avec l'unité d'irradiation (23) verticalement par rapport au support (3).

5. Dispositif (1) selon l'une des revendications 1 à 3, comprenant en outre un autre moyen de déplacement vertical conçu pour déplacer la paroi de cylindre de construction (11) verticalement par rapport au support (3).

6. Dispositif (1) selon l'une des revendications 1 à 5, comprenant en outre une enveloppe intérieure de cylindre de construction (27), dans lequel un bord inférieur de l'enveloppe de cylindre de construction (27) est relié au support (3) et un bord supérieur de l'enveloppe de cylindre de construction (27) est déplaçable verticalement en commun avec l'unité d'irradiation (23) par le moyen de déplacement vertical (25), dans lequel l'enveloppe intérieure de cylindre de construction (27) est conçue pour constituer, dans l'état relié des éléments de paroi (15a, 15b), une paroi intérieure pour la poudre de matière première (9) appliquée sur le support, la poudre de matière première (9) étant directement adjacente à l'enveloppe de cylindre de construction (27).

7. Dispositif (1) selon la revendication 6, dans lequel l'enveloppe intérieure de cylindre de construction (27) comprend au moins l'un des éléments suivants :
- une enveloppe flexible en matériau étirable,
- un soufflet et/ou
- plusieurs segments de paroi conçus pour être emboîtés les uns dans les autres dans un état rentré et déployés de manière télescopique dans un état sorti.

8. Dispositif (1) selon l'une des revendications 1 à 7, comprenant en outre un moyen de liaison conçu pour relier les éléments de paroi (15a, 15b) les uns aux autres pendant un processus de construction.

9. Dispositif (1) de fabrication de pièces tridimensionnelles (19), comprenant :
- un support (3) destiné à recevoir de la poudre de matière première (9),
- une unité d'irradiation (23) destinée à irradier sélectivement la poudre de matière première (9) appliquée sur le support (3) avec un rayonnement électromagnétique ou un rayonnement de particules pour fabriquer sur le support (3) une pièce (19) réalisée à partir de la poudre de matière première (9) par un procédé de construction générative par couches,
- un moyen de déplacement vertical (25) conçu pour déplacer l'unité d'irradiation (23) verticalement par rapport au support (3),
- une paroi de cylindre de construction s'étendant verticalement (11) qui constitue une délimitation latérale pour la poudre de matière première appliquée sur le support (3), la paroi de cylindre de construction (11) étant conçue pour augmenter sa hauteur verticale (h) pendant un processus de construction, et
- une pluralité d'éléments de paroi (15a, 15b) reliés les uns aux autres au moyen de liaisons flexibles, dans lequel une première partie des éléments de paroi (15a) se trouve dans un état vertical, dans lequel les éléments de paroi de la première partie dans l'état vertical forment la paroi de cylindre de construction s'étendant verticalement et dans lequel une deuxième partie des éléments de paroi (15b) se trouve dans un état enroulé, dans lequel les éléments de paroi de la deuxième partie dans l'état enroulé ne forment pas la paroi de cylindre de construction s'étendant verticalement et dans lequel la pluralité d'éléments de paroi sont conçus de manière à pouvoir être déroulés de l'état enroulé dans l'état vertical de sorte que la hauteur verticale (h) de la paroi de cylindre de construction (11) se trouve augmentée.

10. Dispositif (1) de fabrication de pièces tridimensionnelles (19), comprenant :
- un support (3) destiné à recevoir de la poudre de matière première (9),
- une unité d'irradiation (23) destinée à irradier sélectivement la poudre de matière première (9) appliquée sur le support (3) avec un rayonnement électromagnétique ou un rayonnement de particules, pour fabriquer sur le support (3) une pièce (19) réalisée à partir de la poudre de matière première (9) par un procédé de construction générative par couches,
- un moyen de déplacement vertical (25) conçu pour déplacer l'unité d'irradiation (23) verticalement par rapport au support (3),
- une paroi de cylindre de construction s'étendant verticalement (11) qui constitue une délimitation latérale pour la poudre de matière première appliquée sur le support (3), la paroi de cylindre de construction (11) étant conçue pour augmenter sa hauteur verticale (h) pendant un processus de construction,
dans lequel la paroi de cylindre de construction (11) est formée par une paroi flexible (29) en matériau étirable, dans lequel un bord inférieur de la paroi flexible (29) est relié au support (3) et un bord supérieur de la paroi flexible (29) est déplaçable verticalement en commun avec l'unité d'irradiation (23) par le moyen de déplacement vertical (25).

11. Dispositif (1) selon l'une des revendications 1 à 10, comprenant en outre :
- un bac collecteur (31) destiné à collecter la poudre de matière première (9) ruisselant latéralement depuis le support (3) après l'achèvement d'un processus de construction et après la levée ou le retrait au moins partiel(le) de la paroi de cylindre de construction ; et
- un moyen d'étanchéité (33) conçu pour guider la poudre de matière première (9) ruisselant latéralement depuis le support dans le bac collecteur (31).

12. Procédé de fabrication de pièces tridimensionnelles (19) avec un dispositif (1) de fabrication de pièces tridimensionnelles (19), le procédé comprenant :
- l'application de la poudre de matière première (9) sur un support (3),
- l'irradiation sélective de la poudre de matière première (9) appliquée sur le support (3) avec un rayonnement électromagnétique ou un rayonnement de particules par une unité d'irradiation (23) pour fabriquer sur le support (3) une pièce (19) réalisée à partir de la poudre de matière première (9) par un procédé de construction générative par couches,
- le déplacement verticale de l'unité d'irradiation (23) par rapport au support (3) par un moyen de déplacement vertical (25, et
- l'augmentation, pendant un processus de construction, d'une hauteur verticale (h) d'une paroi de cylindre de construction s'étendant verticalement (11) du dispositif (1), qui constitue une délimitation latérale pour la poudre de matière première appliquée sur le support (3),
dans lequel l'étape d'augmentation consiste à relier de manière détachable une pluralité d'éléments de paroi (15a, 15b) les uns aux autres de telle sorte que, dans un état relié, ils forment la paroi de cylindre de construction s'étendant verticalement (11).

13. Procédé selon la revendication 12, comprenant en outre :
- le retrait d'au moins l'un des éléments de paroi (15b), l'élément de paroi retiré (15b) constituant l'un des éléments de paroi les plus bas (15b) de la paroi de cylindre de construction (11), de telle sorte que la poudre de matière première (9) puisse ruisseler latéralement depuis le support (3).

14. Procédé selon la revendication 12 ou 13, comprenant en outre :
- le déplacement verticale de la paroi de cylindre de construction (11) vers le haut, de telle sorte qu'une fente soit formée entre un élément de paroi le plus bas (15b) de la paroi de cylindre de construction (11) et le support (3), à travers laquelle la poudre de matière première (9) peut ruisseler latéralement depuis le support (3).

15. Procédé selon la revendication 13 ou 14, comprenant en outre :
- la collecte de la poudre de matière première ruisselante (9) dans un bac collecteur (31) ; et
- le guidage de la poudre de matière première ruisselante (9) dans le bac collecteur (31) à l'aide d'un moyen d'étanchéité (33).

16. Procédé de fabrication de pièces tridimensionnelles (19) avec un dispositif (1) de fabrication de pièces tridimensionnelles (19), le procédé comprenant :
- l'application de la poudre de matière première (9) sur un support (3),
- l'irradiation sélective de la poudre de matière première (9) appliquée sur le support (3) avec un rayonnement électromagnétique ou un rayonnement de particules par une unité d'irradiation (23) pour fabriquer sur le support (3) une pièce (19) réalisée à partir de la poudre de matière première (9) par un procédé de construction générative par couches,
- le déplacement verticale de l'unité d'irradiation (23) par rapport au support (3) par un moyen de déplacement vertical (25) et
- l'augmentation, pendant un processus de construction, d'une hauteur verticale (h) d'une paroi de cylindre de construction s'étendant verticalement (11) du dispositif (1), qui constitue une délimitation latérale pour la poudre de matière première appliquée sur le support (3),
dans lequel une pluralité d'éléments de paroi sont prévus, qui sont reliés les uns aux autres au moyen de liaisons flexibles, dans lequel une première partie des éléments de paroi se trouve dans un état vertical, dans lequel les éléments de paroi de la première partie dans l'état vertical forment la paroi de cylindre de construction s'étendant sensiblement verticalement et dans lequel une deuxième partie des éléments de paroi se trouve dans un état enroulé, dans lequel les éléments de paroi de la deuxième partie dans l'état enroulé ne forment pas la paroi de cylindre de construction s'étendant sensiblement verticalement, et
dans lequel le procédé comprend en outre le déroulement d'éléments de paroi de l'état enroulé dans l'état vertical de telle sorte que la hauteur verticale de la paroi de cylindre de construction se trouve augmentée.

17. Procédé de fabrication de pièces tridimensionnelles (19) avec un dispositif (1) de fabrication de pièces tridimensionnelles (19), le procédé comprenant :
- l'application de la poudre de matière première (9) sur un support (3),
- l'irradiation sélective de la poudre de matière première (9) appliquée sur le support (3) avec un rayonnement électromagnétique ou un rayonnement de particules par une unité d'irradiation (23) pour fabriquer sur le support (3) une pièce (19) réalisée à partir de la poudre de matière première (9) par un procédé de construction générative par couches,
- le déplacement verticale de l'unité d'irradiation (23) par rapport au support (3) par un moyen de déplacement vertical (25) et
- l'augmentation, pendant un processus de construction, d'une hauteur verticale (h) d'une paroi de cylindre de construction s'étendant verticalement (11) du dispositif (1), qui constitue une délimitation latérale pour la poudre de matière première appliquée sur le support (3),
dans lequel la paroi de cylindre de construction est en outre formée par une paroi flexible en matériau étirable, dans lequel un bord inférieur de la paroi flexible est relié au support, et
dans lequel le procédé comprend en outre le déplacement verticale d'un bord supérieur de la paroi flexible en commun avec l'unité d'irradiation par le moyen de déplacement vertical.
